Europäisches Patentamt

European Patent Office

Office européen des brevets

(11) Publication number: **0 342 283 B1**

# EUROPEAN PATENT SPECIFICATION

(45) Date of publication of patent specification: **17.02.93**

(21) Application number: **88304522.1**

(22) Date of filing: **18.05.88**

(51) Int. Cl.5: **C08L 101/00**, C08F 265/04, G03B 21/60, //(C08L101/00, 33:08)

(54) Thermoplastic and thermoset polymer compositions.

(43) Date of publication of application:
**23.11.89 Bulletin 89/47**

(45) Publication of the grant of the patent:
**17.02.93 Bulletin 93/07**

(84) Designated Contracting States:
**AT BE CH DE ES FR GB IT LI NL SE**

(56) References cited:
EP-A- 0 073 450       EP-A- 0 172 562
GB-A- 2 178 746       US-A- 4 108 923
US-A- 4 165 153       US-A- 4 186 120

(73) Proprietor: **ROHM AND HAAS COMPANY**
**Independence Mall West**
**Philadelphia Pennsylvania 19105(US)**

(72) Inventor: **Wu, Jium-Chen**
**105 Heather Valley Road**
**Holland, PA 18966(US)**
Inventor: **Work, William James**
**1288 Burnett Road**
**Huntington Valley, PA 19006(US)**
Inventor: **Dunkelberger, David Lamar**
**6 Eldridge Road**
**Newtown, PA 18940(US)**
Inventor: **Bortnick, Newman Mayer**
**509 Oreland Mill Road**
**Oreland, PA 19075(US)**

(74) Representative: **Angell, David Whilton et al**
**ROHM AND HAAS (UK) LTD. European Operations Patent Department Lennig House 2 Mason's Avenue**
**Croydon CR9 3NB (GB)**

## Description

This invention is concerned with thermoplastic and thermoset polymer compositions. More particularly, the present invention is concerned with thermoplastic and thermoset polymer compositions which are light-scattering polymer compositions and/or are polymer compositions which have a reduced-gloss or matt surface finish.

Light-diffusing polymers are "semi-transparent" or translucent to visible light, that is, they scatter transmitted light, preferably without significantly reducing its intensity. They may be clear or colored, and may be incorporated into clear or colored thermoplastic or thermoset polymer matrices to form light-scattering thermoplastic or thermoset polymer compositions which may be formed into sheets or films of various thicknesses, or into more complex articles. Such compositions find use as light diffusers in, for example, luminaires, rear projection screens for television or film viewing, decoration, illuminated signs, especially back-lit translucent signs, skylights, lighting fixtures, especially for fluorescent or incandescent lighting, greenhouse glazing, light boxes, drafting tables, automotive sunroofs, artistic applications, such as visual display case components, antiglow screens for CRT units, twin-wall glazing, covers for automotive lights, and many related applications.

Early light diffusers were made from glass, typically by surface treatment such as grinding or etching. Polymeric light-diffusers initially used similar processes, or incorporated finely ground inorganic particles, such as titanium dioxide, barium sulfate and silica, into the polymer matrix. Such particles were difficult to disperse evenly, they reduced the light transmission of the polymer unacceptably, and, because they were usually hard, irregular, ground particles, they tended to abrade the processing equipment.

Glass microspheres solved some of the problems associated with other inorganic particles; they were less abrasive because they were spheres, and they allowed greater light transmission. However, they share a tendency with the other inorganic light diffusers to reduce the physical strength of the polymer.

Light-diffusing polymer particles have also been used to introduce light-scattering properties into transparent matrix polymers. Land, US-A-4,165,153, teaches incorporating polymer particles having a refractive index preferably at least 0.1 units below that of the matrix polymer. Lang, US-A-3,992,486, teaches the use of opaque, porous, crosslinked polymer particles smaller than about 30$\mu$m, formed by endopolymerization and having a refractive index preferably above that of the matrix polymer, as an opacifier, flatting agent and pigment as well as a light-diffusing agent. Krieg et al., US-A-3,883,617, teaches precipitating styrene particles within a monomer system during polymerization, and subsequently thermally crosslinking these particles to form light diffusers. As only styrene is taught, no flexibility exists in selecting the refracive index of the particles with respect to the matrix polymer. Kishida et al., in Japanese 59-38252, teach suspension-polymerized particles of 10 to 500 $\mu$m diameter as light-diffusing particles.

Japanese Patent 64-10515 discloses a method for producing a translucent resin comprising mixing fine particles of a bridging polymer in a transparent resin of a base material, said bridging polymer particles having an average diameter of 0.5 to 5 $\mu$m (microns) and differing in refractive index of the matrix by 0.05 to 0.3. However, the grow-out process taught therein for making the particles suggests that an appreciable quantity of small particles are produced. The reference requires a bridging monomer which is a crosslinking monomer.

Japanese Kokai 62-84156 describes a grow-out process involving polymerization of mixtures of monofunctional and polyfunctional monomers, followed by a staging with a very high concentration of polyfunctional monomers, with oil-soluble initiators onto a pre-formed seed to form fine granules with a granular diameter of 1-30 $\mu$m (microns), preferably 1-20 $\mu$m (microns), and a standard deviation of below 1 $\mu$m (micron), preferably below 0.5 $\mu$m (micron). The Japanese document does not disclose or suggest the use of such particles in thermoplastic or thermoset compositions.

Matt-surface or low-gloss polymers are thermoplastic or thermoset materials which scatter light broadly from the surface instead of having a glossy surface with high reflectance. They may be clear, opaque, or colored, and may be formed into sheets or films of various thicknesses or more complex articles.

Surface alteration of thermoplastics to reduce gloss has been carried out commercially for some years. Manufacturing techniques employed have been the use of specially roughened extruder or calendering rolls, extrusion under conditions producing melt fracture such as is taught for acrylic film in US-A-3,415,796, and the use of small-particle inorganic fillers, such as silica. The first requires special processing equipment; the second requires materials of low melt flow, placing a load on the extruder, and it is difficult to avoid a patterned or "sharkskin" appearance from excessive melt fracture; the third causes wear on thermoplastic processing machinery, and often detracts from the physical properties of the resultant plastic.

Polymeric modifiers which accomplish surface-alteration are known to the art. Acrylonitrile-butadiene-styrene resins have been manufactured with a component wherein a portion of the graft copolymer is crosslinked to an extent that it maintains its shape even during the extrusion process, producing surface-alteration. Similar technology is known for poly(vinyl chloride) (Japanese Kokai 83-33426), but the technology utilizes beads of crosslinked PVC similar in size to the uncrosslinked resin. The height of the surface protrusions is taught to be 1-45 $\mu$m (microns).

Another useful technology is that taught by Lang in US-A-3992486 and US-A-4000216, wherein an endopolymer is prepared by polymerising in bulk or in suspension a monomer mixture containing a crosslinking or graftlinking monomer in the presence of a preformed polymer dissolved therein under conditions where the new polymer is formed as particles of rather broad particle size distribution but in the range of at least about 1 to at least about 30 $\mu$m (microns) dispersed in a continuous phase of the preformed polymer. These particles dispersed in the preformed polymer are then processed with a suitable polymeric matrix to achieve a desired flatted, matt-surfaced, or low gloss plastic.

Each of the above particles suffers from one or more of the following problems: inflexibility of refractive-index choice, hardness of the particle resulting in poorer impact strength, poor dispersion in the matrix polymer with accompanying degradation of matrix-polymer physical strength, and degradation of light transmission in the matrix polymer. It is an object of the present invention to provide a polymeric additive for thermoplastic or thermoset polymers which reduces one or more of the above problems.

In our copending EP-A-269 324, we describe and claim, amongst others, a light-scattering thermoplastic polymer comprising a thermoplastic matrix polymer and, distributed throughout the matrix polymer, from about 0.1% to about 10% of the total composition weight of core/shell polymer particles having an average diameter of from 2 to 15 $\mu$m, a particle size distribution such that at least 90% by weight of the particles fall within ± 20% of the average particle diameter, a core of rubbery alkyl acrylate polymer, the alkyl group having from 2 to 8 carbon atoms, copolymerised with 0 to 50% copolymerisable vinyl monomer, 0 or up to 5% crosslinker and 0 or up to 5% graftlinker (based on the total weight of the core) and having a refractive index ($n_D^{25}$) with ± 0.2 units of, but preferably no closer than ± 0.003 to, the refractive index of the matrix polymer, and one or more polymer shells, the outermost of which is compatible with the matrix polymer, which shells comprise from 5 to 40% of the weight of the particles. These compositions, which form part of the state of the art of the present invention only in the sense of Article 54 (3) and (4) EPC, are specifically excluded from the present invention.

In accordance with one aspect of the present invention we provide a thermoplastic or thermoset polymer composition which comprises a thermoplastic or thermoset matrix polymer and, dispersed therein, from 0.1 to 40% by weight of the total composition of substantially spherical polymer particles having an average diameter of from 2 to 15 micrometers and a particle size distribution such that at least 90% by weight of the particles fall within ± 20% of the average particle diameter; subject to the proviso that when the polymer composition is a light-scattering composition based on a thermoplastic polymer matrix and the spherical polymer particles are present in an amount of from 0.1 to 10% of the total composition weight, the spherical polymer particles are not core/shell polymers having a core of rubbery alkyl acrylate polymer, the alkyl group having from 2 to 8 carbon atoms, copolymerised with 0 to 50% copolymerisable vinyl monomer, 0 or up to 5% crosslinker and 0 or up to 5% graftlinker (based on the total weight of the core) and a refractive index ($n_D^{25}$) within ± 0.2 units of, but preferably no closer than ± 0.003 units to, the refractive index of the matrix polymer, and one or more polymer shells, the outermost of which is compatible with the matrix polymer, which shell(s) comprise 5 to 40% of the weight of the particles.

It is surprising that the compositions of the present invention demonstrate, under certain circumstances, both light-scattering and reduced-gloss properties. Generally, polymer compositions containing only the one additive are unable to demonstrate both properties at the same time to any appreciable extent. Whilst it is purely speculative, and the invention is in no way to be limited by this explanation, it is believed that it is the size and uniformity of the additive particles in the polymer compositions of the present invention which are responsible for these observed properties.

Preferably, the spherical polymer particles are those particles described and claimed in Ugelstad, US-A-4186120, and our copending EP-A-269 324.

In another aspect of the present invention, we provide a light-scattering thermoplastic or thermoset polymer composition which is more efficient, e.g. improved light transmission, than the compositions of the prior art.

In accordance with this aspect of the present invention, we provide a light-scattering thermoplastic or thermoset polymer composition which comprises a thermoplastic or thermoset matrix polymer and, dispersed throughout the matrix polymer, from 0.1 to 40 percent by weight of the total composition of substantially spherical polymer particles having an average diameter of from 2 to 15 micrometers, preferably 2 to 10 micrometers, more preferably 4 to 10 micrometers, still more preferably 5 to 10 micrometers, a particle size distribution such that at least 90% by weight of the particles fall within ± 20%

3

of the average particle diameter, and at least one polymeric phase which has a refractive index ($n_D^{25}$) within ± 0.2 units of, but preferably no closer than about ± 0.003 units to, the refractive index of the matrix polymer; subject to the proviso that when the matrix polymer is thermoplastic and the spherical polymer particles are present in an amount of 0.1 to 10 percent by weight of the total composition, the spherical polymer particles are not core/shell polymers having a core of rubbery alkyl acrylate polymer, the alkyl group having from 2 to 8 carbon atoms copolymerised with 0 to 50% copolymerisable vinyl monomer, 0 or up to 5 percent crosslinker and 0 or up to 5 percent graftlinker (based on the weight of the core), and one or more polymer shells, the outermost of which is compatible with the matrix polymer, which shell or shells comprise from 5 to 40 percent of the weight of the particles.

The spherical polymer particles may comprise only a single polymeric phase, i.e. a single phase polymer, or they may comprise a polymeric core phase, which has the refractive index parameters defined above, and one or more polymeric shell phase(s) i.e. a core/shell polymer.

(1) Single phase polymer

When the polymer particles comprise only a single polymeric phase, the particles may be prepared from one or more vinyl monomers, and may be a rubbery or glassy polymer. The spherical polymer particles may be prepared from polymerization or copolymerization of such monomers as diolefins, e.g. butadiene or isoprene; vinyl aromatic monomers, e.g. styrene or chlorostyrene; vinyl esters, e.g. vinyl acetate or vinyl benzoate; acrylonitrile; methacrylonitrile; (meth)acrylate esters, such as methyl methacrylate, butyl methacrylate, phenyl methacrylate, ethyl acrylate, butyl acrylate, 2-ethylhexyl acrylate and benzyl acrylate; vinyl chloride; and other common monomers polymerizable by free-radical initiation.

The preferred particles are spherical polymer particles of rubbery alkyl acrylate polymer, the alkyl group having from 2 to 8 carbon atoms, copolymerized with 0 or up to about 10% crosslinking monomer, preferably 0 or up to about 5% crosslinking monomer, and 0 or up to about 50% other copolymerizable vinyl monomer. The preferred alkyl acrylate is butyl acrylate, and the preferred other copolymerizable vinyl monomer or monomers are more preferably monovinyl monomers, preferably selected from the group consisting of alkyl methacrylates and monovinyl arenes, and still more preferably styrene. Monovinyl arenes, as used herein, include such monoethylenically unsaturated aromatic monomers as styrene, alkylstyrenes such as methylstyrene and ethylstyrene, other substituted vinylbenzenes wherein the substituents do not interfere with polymerization, and similar vinyl polycyclic aromatic monomers. The indicated percentages are by weight (as are all proportions used herein unless otherwise indicated), and are percentages of the total spherical polymer particles monomer. The alkyl acrylate and any copolymerizable vinyl monomer are selected such that the refractive index of the spherical polymer particle will be within about ±0.2 units, preferably about ±0.1 units, more preferably about ±0.05 units, and still more preferably about ±0.03 units, of the refractive index of the matrix polymer. However, as an exact match between the refractive indices of the spherical polymer particles and matrix polymer will produce an almost completely transparent composition, the refractive index of the spherical polymer particles is preferably no closer than about ±0.003 refractive index units to that of the matrix polymer.

Crosslinking monomers suitable for use as the crosslinker in the spherical polymer particles are well known to those skilled in the art, and are generally monomers copolymerizable with the monounsaturated monomers present, and having polyethylenic unsaturation in which the ethylenically unsaturated groups have approximately equal reactivity, as for example divinylbenzene, glycol di- and trimethacrylates and acrylates, triol triacrylates and methacrylates and the like. The preferred crosslinking monomers are butylene glycol diacrylates. A second class of crosslinking monomers, often referred to as graftlinking monomers, are polyethylenically unsaturated monomers copolymerizable with the monounsaturated monomers present, and having two or more non-conjugated double bonds of differing reactivity, as for example allyl methacrylate, diallyl maleate and allyl acryloxypropionate. The preferred crosslinking monomer from this group is allyl methacrylate. Combinations of both types of crosslinking monomers may be employed. If crosslinking monomer is employed, it is preferably used at levels of from about 0.05 to about 10%, more preferably from about 0.1 to about 5%, and most preferably from about 0.1 to about 1%, based on the total monomer weight.

Alternatively, the spherical polymer particle may be crosslinked using other techniques known to those skilled in the art, as for example by post-cure reactions. Such a post-cure reaction may be seen when a copolymer is formed from a monomer having a pendant peroxide group, which is then activated by heating to a temperature higher than that used in the polymerization. The activated peroxide group will promote crosslinking of the spherical polymer particle. In another example, a second free-radical initiator may be added to the polymerization; this second initiator is selected to be stable at the initial polymerization temperature, but to be activated by light or a higher temperature subsequent to the initial polymerization.

The spherical polymer particle may contain residual oligomeric material used in the polymerization process to swell the polymer particles but such oligomeric material has a high enough molecular weight to prevent its diffusion or being extracted during processing or use, and is present at such a low concentration that it has little or no effect upon mechanical properties of the spherical polymer particles or the light-scattering composition.

The spherical polymer particles useful in the present invention have a particle diameter from about 2 to about 15 $\mu$m, and a narrow particle size distribution within any particular polymer composition, within ±20% of the average particle diameter. If many particles much larger than the desired size are present in the light-scattering composition, the efficiency of diffusion is decreased and the polymer surface is less attractive, while if many undersized particles are present, backscattering increases and overall light transmission decreases. Such a narrow size distribution is readily obtained by emulsion polymerization techniques, but the particles themselves tend to be smaller than 1 $\mu$m. Particles at the upper end of the desired size range may be made by suspension polymerization techniques but the size distribution is unacceptably broad. Consequently, although other techniques for preparing particles having the particle size, size distribution and spherical configuration are useful in the present invention, the preferred technique for making them involves preparing uniformly sized small particles by emulsion polymerizing at least one monomer component of the spherical polymer particle to form emulsion polymer particles, swelling the emulsion polymer particles with one or more monomer components of the spherical polymer particle, and polymerizing the monomer within the emulsion polymer particles. The swelling and polymerizing steps may be repeated until the particles have grown to the desired size. A preferred procedure for making the spherical polymer particles involves emulsion polymerizing the initial emulsion polymer particles using conditions which restrict the molecular weight of the polymer that forms, such as by including chain-transfer moderators, e.g., mercaptans, in the polymerization mixture, such that the resulting emulsion particles comprise an easily swellable oligomer. This process may be varied by preparing the initial emulsion polymer particles in the absence of such limiting of the polymer molecular weight, but subsequently conducting one or more of the swelling and polymerizing steps using the conditions which restrict the polymer molecular weight. In this variation the initial emulsion polymer particles do not swell as readily as subsequent, larger particles having a lower overall molecular weight. As in the preferred process above, at least the final polymerization is carried out under conditions which do not so limit the polymer molecular weight.

The above process for growing larger particles from emulsion-sized particles retains much of the size uniformity of the original emulsion particles, and is capable of increasing the size of the original emulsion-polymerized polymer by a factor of at least 10 and as much as 1000. A small amount of very small emulsion particles may be observed in the product of these processes, but such particles usually account for less than 1.0% of the total particle weight; even if a higher population occurs, such do not adversely affect the optical properties of the light-scattering polymer. Related techniques for preparing uniformly sized particles in the desired size range are taught by Ugelstad, US-A-4,186,120.

Alternative techniques to manufacture of such polymers are disclosed in the literature, although Ugelstad is preferred for the alkyl acrylate copolymers preferred in the present invention. Noted are Schwartz et al, US-A-4,499,828 and Japanese Kokai 62-84156. The latter describes a grow-out process involving polymerization of mixtures of monofunctional and polyfunctional monomers, followed by a staging with a high concentration of polyfunctional monomers, with oil-soluble initiators onto a pre-formed seed to form fine granules with a granular diameter of 1 - 30 $\mu$m (microns), preferably 1 - 20 $\mu$m (microns), and a standard deviation of below 1 $\mu$m (micron), preferably below 0.5 $\mu$m (micron). The Japanese application does not teach or demonstrate the use of such particles for use in light-diffusing plastics, and especially avoids mention of control of refractive index to produce particles useful in manufacture of articles with contact clarity.

The finished spherical polymer particles may be isolated from the emulsion in which they are prepared using conventional techniques such as spray-drying, coagulation and the like. They may also be mixed with the matrix polymer by co-isolation in a devolatilizing extruder, as taught by Bortnick in US-A-3,751,527.

(2) Core/shell polymer

When the polymer particles comprise a polymeric core phase and at least one polymeric shell phase, the core may be prepared from a variety of vinyl monomers, and may be a rubbery or glassy polymer. The core may be prepared from polymerization or copolymerization of such monomers as diolefins, e.g. butadiene or isoprene; vinyl aromatic monomers, e.g. styrene or chlorostyrene; vinyl esters, e.g. vinyl acetate or vinyl benzoate; acrylonitrile; methacrylonitrile; (meth)acrylate esters, e.g. methyl methacrylate, butyl methacrylate, phenyl methacrylate, ethyl acrylate, butyl acrylate, 2-ethylhexyl acrylate, and benzyl acrylate; vinyl chloride; and other monomers polymerizable by free-radical initiation.

The shell or shells preferably comprise from about 5 to about 40% of the weight of the core/shell particles.

The preferred core/shell particles comprise individual particles with a diameter from about 2 to about 15 $\mu$m, preferably from about 5 to about 10 $\mu$m, and a narrow particle-size distribution. The particle size distribution is such that at least 90% by weight of the particles fall within ±20% of the average diameter of the particles; it is understood that the term "particle size distribution" used herein refers to the size range of at least 90% by weight of the particles. The particles have a core of rubbery alkyl acrylate polymer, the alkyl group having from 2 to 8 carbon atoms, copolymerized with 0 or up to about 10%, preferably 0 or up to about 5%, crosslinking monomer, 0 or up to about 10%, preferably 0 or up to about 5%, graftlinking monomer, and 0 or up to about 50% other copolymerizable vinyl monomer. The preferred alkyl acrylate is butyl acrylate, and the preferred other copolymerizable vinyl monomer or monomers are more preferably monovinyl monomers, preferably selected from the group consisting of alkyl methacrylates and monovinyl arenes, and still more preferably styrene. Monovinyl arenes, as used herein, include such monoethylenically unsaturated aromatic monomers as styrene, alkylstyrenes such as methylstyrene and ethylstyrene, other substituted vinylbenzenes wherein the substituents do not interfere with polymerization, and similar vinyl polycyclic aromatic monomers. The indicated percentages are by weight (as are all proportions used herein unless otherwise indicated), and are percentages of the total core monomer. The alkyl acrylate and any copolymerizable vinyl monomer are selected such that the refractive index of the core polymer will be within about ±0.2 units, preferably about ±0.06 units, more preferably about ±0.05 units, and still more preferably about ±0.03, of the refractive index of the matrix polymer. However, as an exact match between the refractive indices of the core polymer and matrix polymer undesirably will produce an almost completely transparent composition, the refractive index of the core polymer is preferably chosen to be no closer than about ±0.003 refractive index units to that of the matrix polymer.

Crosslinking monomers suitable for use as the crosslinker in the core polymer are well known to those skilled in the art, and are generally monomers copolymerizable with the other core monomers and having polyethylenic unsaturation in which the ethylenically unsaturated groups have approximately equal reactivity, as for example divinylbenzene, glycol di- and trimethacrylates and acrylates, and triol triacrylates and methacrylates. The preferred crosslinking monomers are butylene glycol diacrylates. If crosslinking monomer is employed, it is preferably used at levels of from about 0.05 to about 10%, more preferably 0.05 to about 5%, more preferably from about 0.1 to about 5%, and still more preferably from 0.1 to about 1%, based on the total core monomer weight. Graftlinking monomers suitable for use as the graftlinker in the core polymer are also well known, and generally are polyethylenically unsaturated monomers copolymerizable with the other core monomers and having sufficiently low reactivity of the unsaturated groups to allow significant residual unsaturation to remain in the core polymer subsequent to its polymerization, as for example allyl methacrylate, diallyl maleate and allyl acryloxypropionate. The preferred graftlinking monomer is allyl methacrylate. If a graftlinking monomer is employed, it is preferably used at levels from about 0.1 to about 10%, preferably 0.1 to about 5%, more preferably about 0.5 to about 5%, and still more preferably about 0.5 to about 2.5%, based on the total weight of the core monomers.

Alternatively, the core polymer may be crosslinked and the core polymer may be graftlinked to the shell polymer using other techniques known to those skilled in the art, as for example by post-cure reactions. Such a post-cure reaction may be seen when a copolymer is formed from a monomer having a pendant peroxide group, which is then activated by heating to a temperature higher than that used in the polymerization. The activated peroxide group will promote graftlinking and crosslinking of the core/shell polymer components. In another example, a second free-radical initiator may be added to the polymerization; this second initiator is selected to be stable at the initial polymerization temperature, but to be activated by light or a higher temperature subsequent to the initial polymerization.

The core polymer may contain residual oligomeric material used in the polymerization process to swell the polymer particles but such oligomeric material has a high enough molecular weight to prevent its diffusion or being extracted during processing or use, and is present at such a low concentration that it has little or no effect upon mechanical properties of the core, the core/shell polymer, or the light-scattering composition.

Surrounding the core of the particles are one or more shells of polymer, the outer shell being a polymer compatible with the matrix polymer, i.e, the polymer itself is capable of forming a homogeneous blend with the matrix polymer. The outermost shell is preferably a polymer of an alkyl methacrylate, vinyl arene, vinyl carboxylate, alkyl acrylate or a copolymer thereof. For example, a shell of poly(methyl methacrylate) will be compatible with a matrix polymer of poly(methyl methacrylate), or poly(vinyl chloride). The shell polymer may be compatible with the matrix polymer as a result of chemical similarity, as in the above example of methyl methacrylate polymers for the shell and the matrix polymer, or it may be determined empirically to be compatible, as in a shell of styrene copolymerized with about 25 to about 30%, based on total shell monomer weight, of acrylonitrile; this shell is also compatible with a poly(methyl methacrylate) or a poly N-methylglutarimide matrix polymer. Many such compatible polymer combinations for the shell and matrix polymers are known to those skilled in the art, and others may readily be determined by routine experimentation, as for example by preparing blends of proposed shell polymers and the matrix polymer and examining the blends for such evidence of compatibility as absence of haze, existence of a single glass transition temperature, and the like.

The shell polymers comprise from about 5 to about 40%, preferably from about 15 to about 35%, of the total particle weight.

The core/shell polymer particles useful in the present invention have an average particle diameter from about 2 to about 15 $\mu$m, preferably from about 5 to about 10 $\mu$m, and a narrow particle size distribution within any particular polymer composition, preferably within ±20% of the average particle diameter. If many particles much larger than the desired size are present in the light-scattering composition, the efficiency of diffusion is decreased and the polymer surface is less attractive, while if many undersized particles are present, backscattering increases and overall light transmission decreases. Such a narrow size distribution is readily obtained by conventional emulsion polymerization techniques, but the particles themselves tend to be smaller than 1 $\mu$m. Particles at the upper end of the desired size range may be made by conventional suspension polymerization techniques but the size distribution is unacceptably broad. Consequently, although other techniques for preparing particles having the particle size, size distribution and core-shell configuration are useful in the present invention, the preferred technique for making them involves preparing uniformly sized small particles by emulsion polymerizing at least one monomer component of the core polymer to form emulsion polymer particles, swelling the emulsion polymer particles with the same or one or more other monomer components of the core polymer, and polymerizing the monomer(s) within the emulsion polymer particles. The swelling and polymerizing steps may be repeated until the particles have grown to the desired core size. A preferred procedure for making the core involves emulsion polymerizing the initial emulsion polymer particles using conditions which restrict the molecular weight of the polymer that forms, such as by including chain-transfer moderators, e.g., mercaptans, in the polymerization mixture, such that the resulting emulsion particles comprise an easily swellable oligomer. This process may be varied by preparing the initial emulsion polymer particles in the absence of such limiting of the polymer molecular weight, but subsequently conducting one or more of the swelling and polymerizing steps using the conditions which restrict the polymer molecular weight. In this variation the initial emulsion polymer particles do not swell as readily as subsequent, larger particles having a lower overall molecular weight. As in the preferred process above, at least the final polymerization is carried out under conditions which do not so limit the polymer molecular weight.

The process for preparing the particles of the present invention may include:

A) selecting as a rubbery core polymer composition a copolymer of an alkyl acrylate, the alkyl group having from 2 to 8 carbon atoms and the copolymer having a refractive index within ±0.05 units of, but no closer than about ±0.003 units to, the refractive index of the thermoplastic matrix polymer,

B) polymerizing particles of core polymer, from a first aqueous emulsion of one or more of the monomers which, when polymerized, produce the selected core polymer,

C) performing one or more steps of

1) swelling the paricles of core polymer with one or more of the monomers, which, when polymerized, produce the selected core polymer, and

2) polymerizing the swelling monomer within the particles of core polymer, until all of the monomers which lead to the selected core polymer have been polymerized, in these particles and the particles have reached a desired size within the range from about 2 to about 15 $\mu$m, and

D) performing one or more steps of

1) suspending the core polymer particles in a second aqueous monomer emulsion, the monomers of which being polymerisable to form a polymer compatible with the matrix polymer, and

2) polymerizing onto the polymer particles a polymer shell from the monomer in the second emulsion.

The shell or shells are polymerized onto the previously polymerized layers using conventional core/shell techniques such as those taught by Owens, US-A-3,793,902, to which reference is directed for details.

The above process for growing larger particles from emulsion-sized particles retains much of the size uniformity of the original, emulsion particles, and is capable of increasing the size of the original, emulsion-polymerized polymer by a factor of at least 10 and as much as 1000. A small amount of very small emulsion particles may be observed in the product of these processes, but such particles account for less than 0.1% of the total particle weight; even if a higher population occurs, such do not adversely affect the optical properties of the light-scattering polymer. Related techniques for preparing uniformly sized particles in the desired size range are taught by Ugelstad, US-A-4,186,120.

The finished core/shell polymer may be isolated from the emulsion in which it is prepared using conventional techniques such as spray-drying, coagulation and the like. They may also be mixed with the matrix polymer by co-isolation in a devolatilizing extruder, as taught by Bortnick in US-A-3,751,527.

The matrix polymers useful in the present invention are preferably clear thermoplastic polymers that do not crystallize under processing or use conditions, i.e., that have a glass transition temperature higher than about 50°C, and thus are amorphous following incorporation of the particulate polymer composition of the present invention, and that remain amorphous following processing to form the light-scattering composition of the present invention or light-scattering articles made from the sheet. These matrix polymers typically have an elastic modulus of about 1400 to about 3500 MegaPascals (MPa), and may be formed into shaped articles by molding, casting, extrusion or other processes apparent to those skilled in the art. Examples of such matrix polymers include homopolymers of methyl methacrylate, styrene, vinyl chloride, imidized polymers of methyl methacrylate known as polyglutarimides, and copolymers of methyl methacrylate with alkyl acrylates, styrene with up to 40% acrylonitrile, styrene with methyl methacrylate, alpha-methylstyrene with methyl methacrylate and/or alkyl acrylates and vinyl chloride with vinyl acetate and/or propylene; the alkyl group of the alkyl acrylates containing 1 to 8 carbon atoms. Also suitable are homopolymers and copolymers of cellulose acetate butyrate and certain amorphous condensation polymers such as poly-(ethylene terephthalate) and poly(cyclohexanedimethanol terephthalate). Preferred matrix polymers are copolymers of methyl methacrylate with from about 1 to about 15% alkyl acrylates wherein the alkyl contains from 1 to 8 carbon atoms.

Softer matrix polymers, including polymers capable of plasticization, may also be used, such as poly-(vinyl acetate), plasticized vinyl chloride homo-and copolymers, plasticized cellulosic esters and the like.

Another preferred class of matrix polymers useful in the present invention are thermoset polymers. The polymers may be thermoset as prepared, such as in casting of a sheet of poly(methyl methacrylate) containing sufficient polyfunctional monomer to immobilize and insolubilize the resulting sheet, or the polymer may be thermoset after polymerization is completed, such as by activating a cure reaction by heating of the polymerized sheet. Examples of such thermosettable matrix polymers include homopolymers of methyl methacrylate, styrene, vinyl chloride and the like, imidized polymers of methyl methacrylate known as polyglutarimides, and copolymers of methyl methacrylate with alkyl acrylates, styrene with up to 40% acrylonitrile, styrene with methyl methacrylate, alpha-methylstyrene with methyl methacrylate and alkyl acrylates and vinyl chloride with vinyl acetate or propylene. Compatible or refractive-index matched blends of the matrix polymers may be used. Preferred matrix polymers are copolymers of methyl methacrylate with from about 1 to about 15% alkyl acrylates wherein the alkyl contains from 1 to 8 carbon atoms and which also contain a polyfunctional dimethacrylate monomer at the 0.05 to 2% level, or which contain acrylamide and N-methylolacrylamide at the 0.05 to about 5% level.

The thermoset polymers need not be formed from vinyl monomers, but may be prepared by condensation or ring-opening polymerization, such as by polyesterification in the presence of multifunctional glycols or by epoxide polymerization in the presence of trifunctional epoxides.

The single phase polymer and core/shell polymer are incorporated into the matrix polymers preferably by melt blending although other techniques known to those skilled in the art may be employed. For instance, they may be introduced dry into the monomers of the matrix polymer prior to their polymerization, which is a preferred method for thermoset matrices based on vinyl polymerization. Other conventional additives, such as ultraviolet-light stabilizers, soluble flame retardants, dyes, thermal stablilizers, and the like may also be present in the blend of core/shell polymer and matrix polymer.

The level of single phase polymer and core/shell polymer present in the matrix polymer will depend upon the optical effect desired, the thickness of the final fabricated article, the particle size and the difference in refractive index between the particle (core) and the matrix polymer. A practical useful range for the single phase polymer and/or core/shell polymer is from about 0.1 to about 40%, preferably to about 30%, more preferably to about 20% and even more preferably to about 10% of the total polymer weight. Whilst it is most preferred that the level of single phase polymer and/or core/shell polymer in the light-scattering thermoplastic or thermoset composition is from about 0.1 to 10% by weight, for the avoidance of doubt, the present invention does not encompass light-scattering thermoplastic compositions comprising 0.1 to 10% by weight of core/shell polymer having a diameter of from about 2 to about 15 $\mu$m, a size distribution smaller than about ±20% of the average particle diameter, a core of rubbery alkyl acrylate polymer, the alkyl group having from 2 to 8 carbon atoms, the core containing from 0 to about 5%, crosslinker and 0 to about 5% graftlinker (based on the total weight of the core) and having a refractive index ($n_D^{25}$) within about ±0.2 units of, preferably ±0.6 units of, more preferably ±0.05 units of, and even more preferably about ±0.03 units of, but preferably no closer than about ±0.003 to, the refractive index of the matrix polymer, and an outer shell of polymer compatible with the matrix polymer, which shell comprises from about 5 to about 40% of the weight of the particles (these compositions are, in part, the subject of our corresponding EP-A-269 324).

Conventional impact-strength modifiers may also be incorporated into the blend of the spherical polymer particles and matrix polymer of the present invention. Such impact-strength modifiers must be chosen to give a clear, non-light-scattering blend with the matrix polymer alone. Examples of such modifiers for poly(methyl methacrylate) are given by Owens, US-A-3,793,402, and for poly(vinyl chloride) by Myers et al., US-A-3,971,835 and Amagi et al., US-A-3,671,610. It should be noted that the spherical polymer particles, which contain rubbery acrylate polymers, used in the present invention do not significantly degrade, and may in some cases actually improve, the impact strength of the light-scattering composition, unlike inorganic particles and hard, crosslinked polymer particles that have been used as light-scattering agents in the prior art.

In yet another aspect of the present invention, we provide a thermoplastic or thermoset polymer composition having a reduced-gloss or matt surface finish.

In accordance with this aspect of the present invention, we provide a thermoplastic or thermoset polymer composition having reduced-gloss or matt surface finish which comprises a thermoplastic or thermoset matrix polymer and, distributed throughout the matrix polymer, from about 0.1 to about 10% of the total composition weight of substantially spherical polymer particles having an average diameter of from 2 to 15 $\mu$m, preferably 2 to 10 $\mu$m, more preferably 4 to 10 $\mu$m, still more preferably 5 to 10 $\mu$m, a particle size distribution such that at least 90% of the particles fall within ± 20% of the average particle diameter; subject to the proviso that when the matrix polymer is thermoplastic and capable of forming light-scattering composition, the spherical polymer particles are not core/shell polymers having a core of rubbery alkyl acrylate polymer, the alkyl group having from 2 to 8 carbon atoms copolymerised with 0 or up to 5% crosslinker and 0 or up to 5% graftlinker (based on the weight of the core), and a refractive index ($n_D^{25}$) within ± 0.2 units of, but no closer than about ± 0.003 units to, the refractive index of the matrix polymer, and one or more polymer shells, the outer most of which is compatible with the matrix polymer, which shell or shells comprise from 5 to 40% of the weight of the particles.

The matrix polymers useful in the present invention are preferably clear thermoplastic polymers that do not crystallize under processing or use conditions, i.e., that have a glass-transition temperature higher than about 50°C, and thus are amorphous following incorporation of the particulate polymer composition of the present invention, and that remain amorphous following processing to form the low gloss composition of the present invention or low gloss articles made from the sheet. These matrix polymers preferably have an elastic modulus of about 1400 to about 3500 MegaPascals (MPa), and may be formed into shaped articles by molding, casting, extrusion or other processes apparent to those skilled in the art. Examples of such matrix polymers include homopolymers of methyl methacrylate, styrene, vinyl chloride and the like, imidized polymers of methyl methacrylate known as polyglutarimides, and copolymers of methyl methacrylate with alkyl acrylates, styrene with up to 40% acrylonitrile, styrene with methyl methacrylate, alpha-methylstyrene with methyl methacrylate and alkyl acrylates and vinyl chloride with vinyl acetate or propylene. Also suitable are cellulose acetate butyrate and certain amorphous condensation polymers such as poly(ethylene terephthalate), bis-phenol A polycarbonate, poly(cyclohexane-dimethanol terephthalate) and the like. Preferred matrix polymers are copolymers of methyl methacrylate with from about 1 to about 15% alkyl acrylates wherein the alkyl contains from 1 to 8 carbon atoms; also preferred is poly(vinyl chloride).

Softer matrix polymers, including polymers capable of plasticization, may also be used, such as poly-(vinyl acetate), plasticized vinyl chloride homo-and copolymers, plasticized cellulosic esters and the like.

If transparency is not an inherent property of the matrix polymer, then a wider variety of matrix polymers may be used, such as acrylonitrile-butadiene-styrene(ABS), polyolefins, such as polyethylene or polypropylene, engineering resins, such as polycarbonates, polycarbonate-polyester blends, polyamides, poly(alkylene terephthalates) and blends thereof.

The spherical polymer particles are incorporated into the matrix polymers preferably by melt blending although other techniques known to those skilled in the art may be employed. For instance, they may be introduced dry into the monomers of the matrix polymer prior to their polymerization. Other conventional additives, such as ultraviolet-light stabilizers, soluble flame retardants, dyes, thermal stabilizers, plasticizers, and the like may also be present in the blend of spherical polymer particles and matrix polymer.

The level of particulate polymer present in the matrix polymer will depend upon the optical effect desired, the thickness of the final fabricated article, the partculate particle size and the difference in refractive index between the particle core and the matrix polymer. A practical useful range for the spherical polymer particles is preferably from about 0.1 to about 10% of the total polymer weight, although useful effects may be achieved at levels above, e.g. up to about 40% of the total polymer weight, and below this range.

Polymer blends of additive and matrix may be blended and extruded into pellets, which then are molded or extruded into acceptable objects. The blends may be optionally processed directly into sheet or film. Typical matrix polymers which may be used include polymers of methyl methacrylate, of styrene, of styrene copolymers with, e.g., acrylonitrile or methacrylates or maleic anhydride. The additives are useful in preparing low-gloss film and sheet from poly(vinyl chloride) homopolymers, as well as from copolymers of vinyl chloride with vinyl acetate or propylene. Impact modified versions of the above, such as the toughened acrylic polymers taught by Owens, acrylic film such as tuaght in US-A-3562235, poly(vinyl chloride) modified with methacrylate/butadiene/styrene or acrylate/methacrylate staged polymers, ABS plastics, or high-impact polystyrene may be used in conjunction with said flatting agents. Certain polyolefins, such as polyethylene, will also respond to such flatting agents.

Engineering thermoplastics, such as polycarbonates, nylons, poly(alkylene terephthalates), and the like, (including blends of two or more such engineering thermoplastics or blends of such a thermoplastic with an impact modifier) may also be blended with such additive polymers.

Another class of matrix polymers useful in the present invention are thermoset polymers. The polymers may be thermoset as prepared, such as in casting of a sheet of poly(methyl methacrylate) containing sufficient polyfunctional monomer to immobilize and insolubilize the resulting sheet, or the polymer may be thermoset after polymerization is completed, such as by activating a cure reaction by heating of the polymerized sheet. Examples of such thermosettable matrix polymers include homopolymers of methyl methacrylate, styrene, vinyl chloride and the like, imidized polymers of methyl methacrylate known as polyglutarimides, and copolymers of methyl methacrylate with alkyl acrylates, styrene with up to 40% acrylonitrile,styrene with methyl methacrylate, alpha-methylstyrene with methyl methacrylate and alkyl acrylates, vinyl chloride with vinyl acetate or propylene, and the like. Preferred matrix polymers are copolymers of methyl methacrylate with from about 1 to about 15% alkyl acrylates wherein the alkyl contains from 1 to 8 carbon atoms and which also contain a polyfunctional dimethacrylate monomer at the 0.05 to 2% level, or which contain acrylamide and N-methylolacrylamide at the 0.05 to about 5% level.

The thermoset polymers need not be formed from vinyl monomers, but may be prepared by condensation or ring-opening polymerization, such as by polyesterification in the presence of multifunctional glycols or by epoxide polymerization in the presence of trifunctional epoxides.

The spherical polymer particles comprises individual particles with a diameter from about 2 to about 15 $\mu$m, preferably about 2 to about 10 $\mu$m, preferably from about 5 to about 10 $\mu$m, and a narrow particle-size distribution. The particle size distribution is such that at least 90% by weight of the particles fall within ± 20% of the average diameter of the particles; it is understood that the term "particle size distribution" used herein refers to the size range of at least 90% by weight of the particles. The particles may be prepared from one or more vinyl monomers, and may be a rubbery or glassy polymer. The spherical polymer particles may be prepared from polymerization or copolymerization of such monomers as diolefins, such as butadiene or isoprene, vinyl aromatic monomers, such as styrene or chlorostyrene, vinyl esters, such as vinyl acetate or vinyl benzoate, acrylonitrile, methacrylonitrile, (meth)acrylate esters, such as methyl methacrylate, butyl methacrylate, phenyl methacrylate, ethyl acrylate, butyl acrylate, 2-ethylhexyl acrylate, benzyl acrylate, vinyl chloride, and other common monomers polymerizable by free-radical initiation. Copolymers encompass polymers made by staged or power feeds of monomers, so that the spherical polymer particles may not necessarily be uniform in composition.

We have found that matt or flatted surface with low gloss can be obtained for opaque or filled thermoplastic or thermoset matrix polymers. In both cases, we believe the narrow particle size distribution of the particles of the present invention leads to a surprisingly higher efficiency of use, so that less additive polymer is necessary to effect the gloss reduction.

We have also found that if the refractive index of the spherical polymer particles is carefully matched to the refractive index of the thermoplastic or thermoset matrix polymer a light-scattering or substantially clear polymer composition can be formed having excellent flatting performance while maintaining good contact clarity; little diminution is seen in impact, flow or other physical or rheological properties of the matrix polymer versus an unmodified control. Preferably, if the final thermoplastic or thermoset polymer composition is to be light-scattering, then the spherical polymer particles will comprise at least one polymeric phase which has a refractive index ($n_D^{25}$) within ± 0.2 units of, but preferably no closer than about ± 0.003 units to, the refractive index of the matrix polymer. If the thermoplastic or thermoset polymer composition is to be substantially clear or transparant, then the spherical polymer particles will comprise at least one polymeric phase which has a refractive index within ± 0.003 units of the refractive index of the matrix polymer.

The spherical polymer particles may comprise only a single polymeric phase, i.e. a single phase polymer, or they may comprise a polymeric core phase and one or more polymeric shell phase(s) i.e. a core/shell polymer. If the thermoplastic or thermoset polymer composition is to be substantially clear or light-scattering, the single phase polymer or the core of the core/shell polymer preferably has the refractive index parameter described above.

Preferably the spherical polymer particles are as described or prepared in our copending EP-A-269 324 or in Ugelstad US-A-4186120.

In our copending EP-A-269 324 a crosslinked core polymer is prepared and encapsulated by a hard non-crosslinked shell compatible with the matrix polymer. Polymer compositions based on these polymer particles are most effective when a polymer is extruded into a film or sheet without contact with a metal surface while hot.

The technology disclosed by Ugelstad is further discussed in several papers, among them J. Ugelstad and P.C. Mork, Advances in Colloid and Interface Science, 13, 101 (1980). A seed polymer, preferably of oligomeric composition, is prepared by essentially conventional emulsion techniques. The seed is then swollen by monomer, and conditions are established where no initiation in the water-phase occur and no new polymer particles are formed. Large amounts of monomers are taken up and the particle size is greatly increased. The operation may be repeated until the desired particle size range is achieved. The resulting dispersions will settle, but can readily be redispersed by agitation or mixing, so that they can be uniformly added to an appropriate matrix. Alternative techniques have been described by Ugelstad, such as establishing initiation in monomer droplets rather than establishing micelles or agglomerates in the aqueous phase. It is of note that the techniques described by Ugelstad and in our copending European patent application tend to give smaller populations of small particles when the level of styrene in the preferred alkyl acrylate copolymers is low.

Further techniques to preparation of relatively uniform particle size materials by modified emulsion or suspension techniques have appeared in the literature. They do not teach the utility of such polymers as flatting agents, and they have generally been useful for producing non-polar polymers, such as polystyrene, while teaching away from obtaining similar polymers from monomer mixtures rich in acrylate or methacrylate monomers. Japanese Kokai 62-84156 is noted in this respect.

Surrounding the core of the particles may be one or more shells of polymer, the outer shell being a polymer compatible with the matrix polymer, i.e., the polymer iself is capable of forming a homogeneous blend with the matrix polymer. For example, a shell of poly(methyl methacrylate) will be compatible with a matrix polymer of poly(methyl methacrylate), or poly(vinyl chloride). The shell polymer may be compatible with the matrix polymer as a result of chemical similarity, as in the above example of methyl methacrylate polymers for the shell and the matrix polymer, or it may be determined empirically to be compatible, as in a shell of styrene copolymerized with about 30%, based on total shell monomer weight, of acrylonitrile; this shell is also compatible with a poly(methyl methacrylate) matrix polymer. Many such compatible polymer combinations for the shell and matrix polymers are known to those skilled in the art, and others may readily be determined by routine experimentation, as for example by preparing blends of proposed shell polymers and the matrix polymer and examining the blends for such evidence of compatibility as absence of haze, existence of a single glass-transition temperature, and the like.

If a shell is present, the shell polymers comprise from about 5 to about 40%, preferably from about 15 to about 35%, of the total particle weight. The method of our copending European patent application is particularly useful in incorporating such shells.

The preferred particles for modification of poly(vinyl chloride) or poly(methyl methacrylate) matrices are spherical polymer particles of rubbery alkyl acrylate polymer, the alkyl group having from 2 to 8 carbon atoms, copolymerized with 0 or up to about 10% crosslinking monomer, preferably 0 or up to about 5% crosslinking monomer, and 0 or up to about 50% other copolymerizable vinyl monomer. The preferred alkyl acrylate is butyl acrylate, and the preferred other copolymerizable vinyl monomer or monomers are more preferably monovinyl monomers, preferably selected from the group consisting of alkyl methacrylates and monovinyl arenes, and still more preferably styrene. Monovinyl arenes, as used herein, include such monoethylenically unsaturated aromatic monomers as styrene, alkylstyrenes such as methylstyrene and ethylstyrene, other substituted vinylbenzenes wherein the substituents do not interfere with polymerization, and similar vinyl polycyclic aromatic monomers. The indicated percentages are by weight (as are all proportions used herein unless otherwise indicated), and are percentages of the total spherical polymer particles monomer. If a substantially clear polymer composition is required, the alkyl acrylate and any copolymerizable vinyl monomer are selected such that the refractive index of the spherical polymer particle will be within ± 0.003 units of the refractive index of the matrix polymer.

Another particulate polymer composition useful for the modification of acrylic or poly(vinyl chloride) matrix polymers without diminution of physical properties comprises particles of polymer having a diameter of from about 2 to about 10 $\mu$m, a size distribution smaller than about ± 20% of the average particle diameter, a core of rubbery alkyl acrylate polymer, the alkyl group having from 2 to 8 carbon atoms, the core containing 0 or up to about 10% crosslinker (based on the total weight of the core), and having a refractive index ($n_D^{25}$) preferably within about ± 0.003 units of the refractive index of the matrix polymer, and an outer shell of polymer compatible with the matrix polymer, which shell comprises from about 5 to about 40% of the weight of the particles.

Crosslinking monomers suitable for use as the crosslinker in the spherical polymer particles are well known to those skilled in the art, and are generally monomers copolymerizable with the monounsaturated monomers present, and having polyethylenic unsaturation in which the ethylenically unsaturated groups have approximately equal reactivity, as for example divinylbenzene, glycol di- and trimethacrylates and acrylates, triol triacrylates and methacrylates and the like. The preferred crosslinking monomers are butylene glycol diacrylates. A second class of crosslinking monomers, often referred to as graftlinking monomers, are polyethylenically unsaturated monomers copolymerizable with the monounsaturated monomers present, and having two or more non-conjugated double bonds of differing reactivity, as for example allyl methacrylate, diallyl maleate, allyl acryloxyproprionate and the like. The preferred crosslinking monomer from this group is allyl methacrylate. Combinations of both types of crosslinking monomers may be employed. If crosslinking monomer is employed, it is preferably used at levels of from about 0.05 to about 10%, more preferably from about 0.1 to about 5%, and most preferably from about 0.1 to about 1%, based on the total monomer weight.

Alternatively, the spherical polymer particle may be crosslinked using other techniques known to those skilled in the art, as for example by post-cure reactions. Such a post-cure reaction may be seen when a copolymer is formed from a monomer having a pendant peroxide group, which is then activated by heating to a temperature higher than that used in the polymerization. The activated peroxide group will promote crosslinking of the spherical polymer particle. In another example, a second free-radical initiator may be added to the polymerization; this second initiator is selected to be stable at the initial polymerization temperature, but to be activated by light or a higher temperature subsequent to the initial polymerization.

The spherical polymer particle may contain residual oligomeric material used in the polymerization process to swell the polymer particles but such oligomeric material has a high enough molecular weight to prevent its diffusion or being extracted during processing or use, and is present at such a low concentration that it has little or no effect upon mechanical properties of the spherical polymer particles or the light-scattering composition.

As noted, the preferred core/shell polymer particles useful in the present invention have a particle diameter from about 2 to about 10 $\mu$m, preferably from about 2 to about 8 $\mu$m, and a narrow particle size distribution within any particular polymer composition, preferably within ± 20% of the average particle diameter. If many particles much larger than the desired size are present in the surface-altering composition, the efficiency of matting is decreased and the polymer surface is less attractive, while if many undersized particles are present, the efficiency of utilization is greatly decreased. Such a narrow size distribution is readily obtained by emulsion polymerization techniques, but the particles themselves tend to be smaller than 1 $\mu$m. Particles at the upper end of the desired size range may be made by suspension polymerization techniques but the size distribution is unacceptably broad. Consequently, although other techniques for preparing particles having the particle size, size distribution and core-shell configuration are useful in the present invention, the preferred technique for making them involves preparing uniformly sized small particles by emulsion polymerizing at least one monomer component of the core polymer to form emulsion polymer particles, swelling the emulsion polymer particles with one or more monomer components of the core polymer, and polymerizing the monomer within the emulsion polymer particles. The swelling and polymerizing steps may be repeated until the particles have grown to the desired core size. A preferred procedure for making the core involves emulsion polymerizing the initial emulsion polymer particles using conditions which restrict the molecular weight of the polymer that forms, such as by including chain-transfer moderators, e.g., mercaptans, in the polymerization mixture, such that the resulting emulsion particles comprise an easily swellable oligomer. This process may be varied by preparing the initial emulsion polymer particles in the absence of such limiting of the polymer molecular weight, but subsequently conducting one or more of the swelling and polymerizing steps using the conditions which restrict the polymer molecular weight. In this variation the initial emulsion polymer particles do not swell as readily as subsequent, larger particles having a lower overall molecular weight. As in the preferred process above, at least the final polymerization is carried out under conditions which do not so limit the polymer molecular weight.

When a core/shell polymer is used, the shell or shells are polymerized onto the previously polymerized layers using conventional core/shell techniques such as those taught by Owens, US-A-3,793,902, to which reference is directed for details.

The above process for growing larger particles from emulsion-sized particles retains much of the size uniformity of the original, emulsion particles, and is capable of increasing the size of the original, emulsion-polymerized polymer by a factor of at least 10 and as much as 1000. A small amount of very small emulsion particles may be observed in the product of these processes, but such particles account for less than 0.1% of the total particle weight; even if a higher population occurs, such do not adversely affect the optical properties of the light-scattering polymer.

The finished particles, whether encapsulated by a shell or not, may be isolated from their aqueous media by allowing to settle and decantation or filtering. They may also be isolated by adding in aqueous dispersion to the matrix polymer in the melt and allowing the water to evaporate rapidly. Alternatively, coagulation aids, such as salts or acids may be added to eliminate adventitious white water. Spray-drying may also be employed. A small amount of copolymerizable unsaturated acid, such as methacrylic or acrylic acid, may be incorporated into the monomers used for the final step of the shell polymerization, or the final step of particle polymerization if no shell is added, to improve the dispersion stability of the particles when dispersed in the aqueous media. If the isolation process involves a later devolatilization step, the aqueous dispersion may be admixed directly with the matrix polymer, and the water removed as vapor or as liquid. Such equipment as a Welding-Engineers twin-screw devolatilizing extruder may be used, as taught by Bortnick in US-A-3,751,527. The particulate polymer aqueous preparation may also be admixed with an impact modifier and/or polymeric processing aid in emulsion form and the products co-isolated by spray-drying, coagulation, or a devolatilization-extrusion process.

Conventional impact-strength modifiers may also be incorporated into the blend of core/shell polymer and matrix polymer. To obtain a clear impact-modified blend with a matt surface, such modifiers must be chosen to give a clear, non-light-scattering blend with the matrix polymer alone. Examples of such modifiers for poly(methyl methacrylate) are given by Owens, US-A-3,793,402, and for poly(vinyl chloride) by Myers et al., US-A-3,971,835 and Amagi et al., US-A-3,671,610. It should be noted that the acrylic-based single phase or core/shell polymer particles of the present invention do not significantly degrade, and may in some cases actually improve, the impact strength of the particle polymer-matrix polymer blend, unlike inorganic particles and hard, crosslinked polymer particles that have been used as light-scattering agents in the prior art.

Such a surface-altered or matt-finished or low gloss composition is especially useful for surfaces of molded or shaped objects where low reflectance is desired, such as machine, TV set, computer, and office equipment housings. Such are also useful in clear film and sheet to achieve high contact clarity while reducing glare; such uses include protective glazing for photographs and paintings, film, such as poly(vinyl chloride) (PVC) film, wraps for small objects such as batteries, overlays for printed material, and the like. Such surface altered polymers may also be used in films requiring a slightly roughened surface for improved adhesion, such as polyolefin films or be used to reduce adhesion between surfaces and so prevent blocking.

For uses where clarity is desired, we have found that narrow particle-size distribution pariculate polymers within a relatively narrow particle range of about 2 to about 10 microns and carefully refractive-index matched with the substrate exhibit excellent flatting performance while maintaining good contact clarity. For uses where clarity is not essential, it is not necessary to supply the refractive index match, although such may be desired for best pigmentation effects. The particulate polymers may be further modified with a shell polymer having compatibility with the matrix polymer, the shell being about 5 to about 40% of the final isolated polymeric additive. Preferably about 0.1 to about 10% of the particulate polymer additive is effective in achieving surface alteration of the matrix polymer.

Uses of such molded or extruded objects are many. Housings for electronic equipment, such as TV cabinets or housings for computers may be prepared with a low gloss from the additives of this invention. Low gloss film of good contact clarity may be prepared for covering of pictures or photographs to avoid glare from reflected light. Calendered sheet and sign stock may be prepared. Pigments, fillers, impact modifiers, stabilizers, etc. may be added to the formulation to achieve appropriate manufactured articles. Building products, such as siding, roofing, windows, and extruded profile, made from poly(vinyl chloride) or other plastics may exhibit a desirable lowered gloss without diminution of other properties when manufactured with the additives of the present invention.

The following examples are intended to illustrate the present invention and not to limit it, except as it is limited in the claims. All ratios and percentages are by weight, unless otherwise noted and all reagents are of good commercial quality unless otherwise noted.

EXAMPLES

Example 1

This example illustrates preparation of 0.3 $\mu$m-diameter particles of butyl acrylate-styrene copolymer by emulsion polymerization. The following aqueous mixtures were prepared:

| Mixture | Component | Parts by Weight |
|---------|-----------|-----------------|
| A | Water | 162 |
|   | Potassium Carbonate | 0.12 |
| B | Butyl Acrylate | 66 |
|   | Styrene | 15 |
|   | n-octyl mercaptan | 19 |
|   | 10% aqueous sodium dodecylbenzenesulfonate | 5.3 |
|   | Water | 19 |
| C | Potassium Persulfate | 0.014 |
|   | Water | 1.4 |
| D | Potassium Persulfate | 0.055 |
|   | Water | 8.3 |

A reactor equipped with a stirrer and condenser and blanketed with nitrogen was charged with Mixture A and heated to 87°C. To the stirred reactor contents were added 7% of Mixture B and all of Mixture C; the reactor contents were stirred for 30 minutes, after which the remaining Mixture B and Mixture D were added, with stirring, over a period of 90 minutes. The reactor contents were maintained at 87°C with stirring for 50 minutes, after which the resulting emulsion was cooled to room temperature. The butyl acrylate-styrene particles were 0.3 $\mu$m in diameter, as measured by Nanosizer.

Example 2

This example illustrates growing 2 $\mu$m-diameter particles of uniform size from the 0.3 $\mu$m-diameter particles of Example 1, using an emulsion of butyl acrylate with allyl methacrylate graftlinking monomer. The following aqueous mixtures were prepared:

| Mixture | Component | Parts by Weight |
|---------|-----------|-----------------|
| A | Butyl Acrylate | 96 |
|   | Allyl Methacrylate | 4.0 |
|   | Benzoyl Peroxide | 0.80 |
| B | Water | 226 |
|   | 10% aqueous Sodium Dodecylbenzenesulfonate | 3.1 |
| C | The polymer emulsion of Ex. 1 | 1.5 |

Mixture A was blended with Mixture B in a Waring Blender for 3 minutes to form an emulsion. This emulsion was charged to a pressure reactor with Mixture C, and the reactor contents were stirred under a nitrogen blanket for 1 hour. The reactor was sealed, shaken in a water bath at 68°C for 3 hours, and cooled to room temperature. The polymer particles from the reaction mixture, when examined by optical microscopy, were uniformly sized and about 2 $\mu$m in diameter.

Example 3

This example illustrates growing 5 $\mu$m-diameter particles from the 2$\mu$m particles of Example 2. The procedure of Example 2 was repeated, except that Mixture C was 23 parts by weight of the particle dispersion produced in Example 2. The resulting particles had a diameter of approximately 5 $\mu$m.

Example 4

This example illustrates preparation of a different emulsion polymer for use in preparing the spherical polymer particles of the present invention. The following mixtures were prepared:

| Mixture | Component | Parts by Weight |
|---|---|---|
| A | Water | 208 |
| | Sodium Carbonate | 0.38 |
| B | Butyl Acrylate | 98 |
| | Butylene Glycol Diacrylate | 0.25 |
| | Allyl Methacrylate | 2.0 |
| | 10% aqueous Sodium Dodecylbenzenesulfonate | 4.0 |
| | Water | 40 |
| C | Potassium Persulfate | 0.063 |
| | Water | 35 |

A reactor equipped with stirrer and condenser and blanketed with nitrogen was charged with Mixture A and heated to 82°C. To the reactor contents was added 15% of Mixture B and 25% of Mixture C. The temperature was maintained at 82°C and the mixture was stirred for 1 hour, after which the remaining Mixture B and Mixture C were added to the reactor, with stirring over a period of 90 minutes. Stirring was continued at 82°C for 2 hours, after which the reactor contents were cooled to room temperature. The particle size of the resulting emulsion particles was 0.2 $\mu$m, as measured by Nanosizer.

Example 5

In this example the particles in the emulsion of Example 4 are grown to 0.5 $\mu$m diameter using an emulsion of butyl acrylate and styrene. The following mixtures were prepared:

| Mixture | Component | Parts by Weight |
|---|---|---|
| A | Water | 185 |
| | Sodium Carbonate | 0.081 |
| | Polymer Emulsion from Example 4 | 35 |
| B | Butyl Acrylate | 82 |
| | Styrene | 18 |
| | 10% aqueous Sodium Dodecylbenzenesulfonate | 2.5 |
| | Water | 32 |
| C | 1-Hexanethiol | 19 |
| | 10% aqueous Sodium Dodecylbenzenesulfonate | 2.8 |
| | Water | 11 |
| D | Potassium Persulfate | 0.11 |
| | Water | 18 |
| E | t-Butyl Hydroperoxide | 0.18 |
| | Water | 3.7 |
| F | 3% aqueous Sodium Formaldehyde Sulfoxylate | 4.1 |

Mixture A was added to the reactor of Example 4 and heated to 88°C with stirring. Mixtures B, C and D were added, with stirring, to the reactor over a period of 3 hours, after which the temperature was maintained at 88°C, with stirring, for 90 minutes. The reactor contents were cooled to 65°C, Mixtures E and F were added, and the reactor contents were maintained at 65°C, with stirring, for 1 hour, after which the reactor contents were cooled to room temperature. The resulting emulsion polymer particles had a diameter of 0.5 $\mu$m as measured by Nanosizer.

Example 6

This example illustrates growing 5 $\mu$m diameter particles from the 0.5 $\mu$m particles of Example 5 using an emulsion of butyl acrylate containing allyl methacrylate crosslinker. In this example the procedure of Example 2 was repeated, except that 0.34 parts of the 0.5 $\mu$m diameter particle emulsion from Example 5 was used as Mixture C, t-butyl peroctoate replaced benzoyl peroxide, and the initiator was introduced into the oligomer seed prior to swelling and polymerization. The resulting polymer particles had a narrow particle size distribution and an average particle diameter of about 5 $\mu$m, as determined by optical microscopy.

Example 7

This Example illustrates preparation of a light-scattering polymer composition using a matrix polymer of poly(methyl methacrylate) and the spherical polymer particles of the present invention prepared in Example 6. The spherical polymer particles were isolated from the aqueous dispersion by freeze-drying. The isolated particles were melt-blended at various weight percentages with poly(methyl methacrylate) having a weight-average molecular weight of about 120,000, at 232°C. The blended polymer was compression moulded at 204°C into 12.7-cm-square plaques, and were evaluated for optical properties at room temperature. A goniophotometer was used to determine the intensity of light transmitted through the sample plaque at different angles. A HunterLab colorimeter was employed to measure the haze and total luminous transmittance using CIE source C. Hiding power is calculated by the following:

$$\text{Hiding Power} = \frac{I[2]}{I[0]}$$

where I [0] is the transmitted light intensity at an angle of 0°, and I[2] is the transmitted light intensity at an angle of 2°.

Examples 8-12

These examples illustrate the optical properties of certain blends of spherical polymer particles with poly(methyl methacrylate).

Table I

Optical Properties of Blends of Poly(methyl methacrylate)(PMMA) and 5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 8 | 0.20 | 1.46 | 0 | 93 | 0.0038 | 1.2 |
| 9 | 0.20 | 1.46 | 2.5 | 89 | 1.0 | 98 |
| 10 | 0.20 | 1.46 | 3.5 | 89 | 1.0 | 98 |
| 11 | 0.20 | 1.46 | 5.0 | 88 | 1.0 | 98 |
| 12 | 0.20 | 1.46 | 10 | 80 | 1.0 | 99 |

Examples 13 - 37

These examples illustrate the use of spherical polymer particles of the present invention with different matrix polymers having different refractive indices. Because the refractive indices of the spherical polymer particles prepared in Examples 6 to 12 were adjusted to be suitable for poly(methyl methacrylate), those spherical polymer particles of Examples 4 and 8 were non-optimal for other matrix polymers. Using the procedures of Examples 4-6, spherical polymer particles of the present invention were prepared by adjusting the butyl acrylate/styrene ratio to achieve the refractive index appropriate to the matrix polymer. The resulting spherical polymer particles were blended with the matrix polymers to produce light-scattering polymer compositions of the present invention. Table II shows the properties and processing conditions of the matrix polymers, and Tables III through VIII indicate the refractive index and particle size of particulate polymers suitable for preparing the matrix polymer-particle blends of the present invention. Each blend was milled for 3 - 5 minutes at conditions shown in Table II for the matrix control.

17

Table II

Suitable Matrix Polymers

| Matrix | Milling/ Molding Temp. ° C | Refrac- tive Index |
|---|---|---|
| Poly(methyl methacrylate) (Ex. 8-12) | 232 | 1.49 |
| Polystyrene | 204 | 1.59 |
| Polycarbonate (PC) | 219 | 1.585 |
| Poly(vinyl chloride) (a) (PVC) | 171 | 1.54 |
| Poly(vinyl acetate) (b) (PVAc) | 160 | 1.467 |
| Poly(methyl methacrylate)/co- alpha methylstyrene (c)   P(MMA/aMS) | 210 | 1.52 |
| Poly(N-methyl glutarimide) (d) (PGI) (e) | 219 | 1.53 |

(a)    Contains stablizers and processing aid in formulation;  no impact modifier or plasticizer. Refractive index given was PVC homopolymer.

(b)    Weight-average molecular weight was 500,000.

(c)     Methyl methacrylate/alpha-methylstyrene/ethyl acrylate, 73.5/24.5/2; Wt-Avg. MW = 115,000.

(d)     Prepared from PMMA and methylamine by method of Kopchik, US-A-4,246,374 to a degree of imidization producing a Vicat softening point of the resulting polymer of 150 degrees C.

Table III

Optical Properties of Blends of Polystyrene (PS) and 5 Micrometer Polymer Particles

| Example No. | Blend Approx. Thickness, cm. | Polymer Particles | | Optical Properties | | |
| --- | --- | --- | --- | --- | --- | --- |
| | | N25 D | Conc'n. Wt. % | Trans. % | Hiding Power | Haze % |
| 13 | 0.20 | 1.56 | 0 | 90 | 0.0041 | 9.4 |
| 14 | 0.20 | 1.56 | 2.5 | 85 | 0.74 | 96 |
| 15 | 0.20 | 1.56 | 3.5 | 85 | 0.96 | 98 |
| 16 | 0.20 | 1.56 | 5.0 | 86 | 0.99 | 98 |
| 17 | 0.20 | 1.56 | 10 | 82 | 1.00 | 98 |

## Table IV

### Optical Properties of Blends of Polycarbonate (PC) and 5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 18 | 0.20 | 1.56 | 0 | 85 | 0.0039 | 9.7 |
| 19 | 0.20 | 1.56 | 2.5 | 75 | 0.072 | 83 |
| 20 | 0.20 | 1.56 | 3.5 | 75 | 0.44 | 97 |
| 21 | 0.20 | 1.56 | 5.0 | 75 | 0.96 | 98 |
| 22 | 0.20 | 1.56 | 7.0 | 70 | 0.98 | 98 |

## Table V

### Optical Properties of Blends of Poly(vinyl chloride) (PVC) and 5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 23 | 0.20 | 1.51 | 0 | 73 | 0.0075 | 7.8 |
| 24 | 0.20 | 1.51 | 2.5 | 61 | 0.99 | 98 |
| 25 | 0.20 | 1.51 | 3.5 | 66 | 1.0 | 98 |
| 26 | 0.20 | 1.51 | 5.0 | 66 | 0.99 | 98 |

20

Table VI

Optical Properties of Blends of Poly(vinyl acetate)
(PVAc) and 5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 27 | 0.20 | 1.50 | 0 | 91 | 0.0044 | 5.2 |
| 28 | 0.20 | 1.50 | 2.5 | 76 | 1.0 | 98 |
| 29 | 0.20 | 1.50 | 5.0 | 69 | 1.0 | 99 |

Table VII

Optical Properties of Blends of Poly(methyl
methacrylate-co-alpha-methylstyrene) and
5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 30 | 0.20 | 1.49 | 0 | 92 | 0.0030 | 2.2 |
| 31 | 0.20 | 1.49 | 1.5 | 67 | 0.74 | 98 |
| 32 | 0.20 | 1.49 | 2.5 | 57 | 0.99 | 99 |
| 33 | 0.20 | 1.49 | 5.0 | 57 | 1.0 | 99 |

Table VIII

Optical Properties of Blends of Poly(N-methyl glutarimide) and 5 Micrometer Polymer Particles

| Example No. | Blend Approx. Thickness, cm. | Polymer Particles | | Optical Properties | | |
|---|---|---|---|---|---|---|
| | | N25 D | Conc'n. Wt. % | Trans. % | Hiding Power | Haze % |
| 34 | 0.20 | 1.50 | 0 | 92 | 0.0036 | 2.2 |
| 35 | 0.20 | 1.50 | 0.5 | 71 | 0.071 | 79 |
| 36 | 0.20 | 1.50 | 1.5 | 61 | 0.50 | 98 |
| 37 | 0.20 | 1.50 | 2.5 | 56 | 1.0 | 99 |

Example 38

This example illustrates blending of the modifier of Examples 9 - 12 into an acrylic matrix by a masterbatching technique. The modifier employed in those examples (35 parts) is admixed with a commercial acrylic molding powder, having a composition of MMA/EA = 95/5 and a MW of about 160,000. The materials are blended in a 25.4 mm. Killion extruder at a barrel temperature of 218°C. Portions of this masterbatch are further diluted with the commercial acrylic molding powder by re-extrusion under the same conditions to give the desired lower level of particulate polymer. Plaques or sheets formed from these admixtures will demonstrate a balance of light transmittance and light scattering similar to those direct blends exemplified in Examples 9 - 12 and will be suitable for uses such as skylighting and internally luminated signs.

Example 39

This example illustrates growing 2 μm-diameter particles of uniform size from the 0.3 μm-diameter particles of Example 1, using an emulsion of butyl acrylate with butylene glycol diacrylate crosslinking monomer and allyl methacrylate graftlinking monomer. The following aqueous mixtures were prepared:

| Mixture | Component | Parts by Weight |
|---|---|---|
| A | Butyl Acrylate | 98 |
| | Butylene Glycol Diacrylate | 0.50 |
| | Allyl Methacrylate | 2.0 |
| | Benzoyl Peroxide | 0.80 |
| B | Magnesium p-Nitrosophenolate | 0.011 |
| | Water | 226 |
| | 10% aqueous Sodium Dodecylbenzenesulfonate | 3.1 |
| C | The polymer emulsion of Ex. 1 | 1.5 |

Mixture A was blended with Mixture B in a Waring Blender for 3 minutes to form an emulsion. This emulsion was charged to a pressure reactor with Mixture C, and the reactor contents were stirred under a nitrogen blanket for 1 hour. The reactor was sealed, shaken in a water bath at 68°C for 3 hours, and cooled to room temperature. The polymer particles from the reaction mixture, when examined by optical microscopy, were uniformly sized and about 2 μm in diameter.

Example 40

This example illustrates growing 5 μm-diameter particles from the 2μm particles of Example 2. The procedure of Example 39 was repeated, except that Mixture C was 23 parts by weight of the particle dispersion produced in Example 39. The resulting particles had a diameter of approximately 5 μm.

Example 41

This example illustrates polymerizing an outer shell of methyl methacrylate and ethyl acrylate onto the particles of Example 40, to finish the core/shell polymer particles of the present invention. The following aqueous mixtures were prepared:

| Mixture | Component | Parts by Weight |
|---|---|---|
| A | Particle dispersion from Ex. 40 | 1348 |
| B | Methyl Methacrylate<br>Ethyl Acrylate | 96<br>4.0 |
| C | 3% aqueous Sodium Formaldehyde Sulfoxylate<br>10% aqueous Sodium Dodecylbenzenesulfonate<br>Water | 10<br>1.5<br>53 |
| D | t-Butyl Hydroperoxide<br>Water | 0.45<br>14 |

Mixture A was weighed into a reactor equipped with a stirrer and condenser and blanketed with nitrogen. The reactor contents were heated to 65°C and stirred under the nitrogen blanket; Mixture B, C and D were separately added to the reactor over a period of 90 minutes. The temperature was maintained at 65°C, and stirring was continued, for 30 minutes, after which the reactor contents were cooled to room temperature. The resulting particles were about 5 μm in diameter, with less than about 20% of the number of particles between 2 and 4 μm and a very small number of particles were below 0.5 μm.

Examples 51-65

These examples illustrate the preparation of polymers useful as surface-altering agents for clear poly-(vinyl chloride). A series of polymers were prepared by the teaching of US-A-4186120. They were not removed from their aqueous media, but were obtained at about 15% solids. Prior to use, they could be readily redispersed in the aqueous media by shaking or stirring.

TABLE XI

| Composition and Particle Size of Surface-Altering Agents | | |
|---|---|---|
| Example | Composition | Particle Size, μm (microns) |
| 51 | BA/St/ALMA 37/60/3 | 2.1 |
| 52 | BA/St/ALMA 37/60/3 | 3.3 |
| 53 | BA/St/ALMA 37/60/3 | 5.2 |
| 54 | BA/St/ALMA 37/60/3 | 8.2 |
| 55 | BA/St/DVB 37/60/3 | 3.3 |
| BA = n-butyl acrylate; St = styrene; ALMA = allyl methacrylate; DVB = divinylbenzene. | | |

A dry blend was prepared of PVC resin of K value 69 (Geon 110-450) 100 parts, dibutyltin di(alkyl mercaptoacetate) tin stabilizer 2 phr (parts per hundred of resin), diisodecyl phthalate plasticizer 50 phr, and stearic acid 0.5 phr. While milling on a two-mill roll, an amount of emulsion of the polymers of Example 51 was added at a weight of solids of 0.5 or 1.0 phr. The water evaporated immediately, and the flatting agent was dispersed at roll speeds of 26/20 for 5 minutes at 162°C. After 3 minutes into the compounding, a sufficient quantity of the stock was removed from the mill to yield a pencil thin rolling blank to subsequently produce a sheet of about 0.003 cm. After a total of five minutes of mill roll processing, the stock was removed from the mill and allowed to cool on a flat surface (mill side down). A representative 10 by 12.5 cm. piece cut from each sheet, taped, mill side up, to a rigid substrate, spray painted with three coats of a flat black paint and allowed to dry. The surface gloss was measured on the unpainted side following ASTM D532 using a Hunterlab Glossmeter Model D487.

A commercial flatting agent (Rohm and Haas KF-710) exhibiting a very broad particle size distribution, 1-50 $\mu$m, was dispersed into the PVC melt and tested as a control. Duplicate numbers show a repeated experiment.

TABLE XII

| EFFECT OF ADDITIVE PARTICLE SIZE ON SURFACE REFLECTANCE | | | | |
|---|---|---|---|---|
| Example | Additive of Example | Amount phr | Hunter Gloss | |
| | | | 60° | 85° |
| 56 | None | -- | 79, 81 | 88, 92 |
| 57 | KF-708 | 1.3 | 13 | 19 |
| 58 | 51 | 1.0 | 17 | 35 |
| 59 | 52 | 0.5 | 22 | 40 |
| 60 | 52 | 1.0 | 18 | 31 |
| 61 | 53 | 0.5 | 21 | 24 |
| 62 | 53 | 1.0 | 13 | 16 |
| 63 | 54 | 0.5 | 24 | 29 |
| 64 | 54 | 1.0 | 13 | 15 |
| 65 | 55 | 1.0 | 68 | 95 |

The additives of Examples 63 (5.2 $\mu$m (microns)) and 64 (8.8 $\mu$m (microns)) were more efficient at 1.0 phr than the commercially accepted control at 1.3 phr. The additive of Example 65, crosslinked with divinylbenzene, was apparently not sufficiently crosslinked to exhibit flatting as pronounced as the commercial control, although a diminution over the unmodified sample was noted.

Examples 66-73

These examples illustrate the use of similar additives in the surface-alteration of flatting of extruded rigid poly(vinyl chloride) sheet. The formulation utilized for the testing was as follows, where phr was parts per hundred parts of PVC resin:

| | |
|---|---|
| PVC homopolymer, K = 69 | 100 parts |
| Dimethyltin di (alkyl mercaptoeacetate) | 1.6 phr |
| Wax paraffin type | 1.0 |
| Calcium stearate | 1.3 |
| Titanium dioxide | 10 |
| Acrylic processing aid | 0.5 |
| Acrylic lubricating processing aid | 1.0 |
| Acrylic impact modifier | varied |
| Flatting additive | varied |

The equipment for the test was a Haake Rheocord (EU5) and the Haake Rheomix 252 1.9 cm. extruder fitted with a 3/1 compression ratio single stage screw and a 7.62 cm by 0.12 cm. "coathanger" die. The zone temperature settings were Z1 = 175°C, Z2 = 185°C, Z3 = 195°C and die = 195°C.

If the polymeric additive was available in dry form, a dry blend was prepared as a masterbatch, without the impact modifier and flatting additive, in a high intensity blender. The modifier and flatting additive were blended just prior to extrusion into sheet. The surface gloss of the extruded sheet samples was measured on the white sheet samples using the Hunterlab gloss meter. If the surface-altering agent was in emulsion form, it was stirred and admixed with the above blend in powder form. The blend was then dried in vacuo at 60°C for three days.

A Gardner gloss test, similar to the Hunter values but using a Glossgard II Glossmeter (Gardner Instruments Division, Pacific Scientific) was also applied in this study.

TABLE XIII

| GLOSS RESULTS ON SURFACE-ALTERED RIGID PVC SIDING | | | | | |
|---|---|---|---|---|---|
| Example | Additive from Example | Additive Level | Gardner Gloss, 60° | Hunter Gloss | |
| | | | | 60° | 85° |
| 66 | None | -- | 63 | 64 | 96 |
| 67 | KF-710 | 1.3 | 15.5 | 15.5 | 19 |
| 68 | 51 | 0.5 | 30 | 31 | 66 |
| 69 | 51 | 1.0 | 21.5 | 21.5 | 44 |
| 70 | 51 | 2.0 | 13.5 | 14 | 22 |
| 71 | 54 | 0.5 | 24 | 23.5 | 32 |
| 72 | 54 | 1.0 | 14 | 14.5 | 19 |
| 73 | 54 | 2.0 | 9 | 9 | 10 |

Example 74

This Example illustrates the use of such spherical polymer particles for altering the surface appearance of a poly(methyl methacrylate) sheet matrix. A terpolymer is prepared by the method of Example 51, having a composition of methyl methacrylate/butyl methacrylate/Divinylbenzene (DVB) = 47.5/50/2.5 and a paricle size of ca. eight $\mu$m (microns). The terpolymer is admixed with 90 parts of a commercial acrylic molding resin, which is a methyl methacrylate polymer with a small amount of copolymerized alkyl acrylate, having a melt viscosity of ca. 560 Ns/m$^2$ (5600 poises) at 400 sec-1 and 246°C. After tumbling the dry polymers for several minutes, the mixture is pelletized by extrusion through a small Killion 2.54 cm. extruder at a melt temperature of ca. 260°C. through a strand die, utilizing a high work screw. The resultant pellets are extruded into sheet on a 2.54 cm Killion extruder with a medium work screw at a melt temperature of 242-249°C., equipped with a 15.2 cm. flat sheet die. The sheet is directly passed into two heated polished rolls (79°C) set at a 100 mil sheet setting. The resulting sheet exhibits low gloss, low internal haze, little decrease in impact resistance, and a slight loss in service temperature relative to an extrusion of V-045-100 alone; only slightly higher melt viscosity will be observed.

Examples 75-76

These Examples illustrate the use of a core/shell polymer prepared by the method of our copending EP-A-269 324. By the procedures taught in Examples 1-5 of that application was prepared and isolated a particulate polymer of five $\mu$m (microns) particle size and of composition butyl acrylate 76.8/allyl methacrylate 3.2 // methyl methacrylate 19.21 ethyl acrylate 0.80.

This modifier was blended with an methyl methacrylate molding resin as taught in Example 74 and a commercial impact-modified clear methacrylic resin, so that the mixture contained equal amounts of both matrix polymers. Processing was by the procedure of Example 74. Testing was on 0.178 cm (70 mil) extruded sheet. When this formulation was tested in injection or compression molded samples, no reduction of gloss was observed.

EP 0 342 283 B1

TABLE XIV

| Effect of Core/Shell Particulate Polymer of Narrow Particle Size Distribution on Gloss of Impact-Modified Acrylic Sheet | | | |
|---|---|---|---|
| Example | Particulate Additive, Wt% | Total Luminous Transmittance % | Hunter Gloss, 60° |
| 75 | None | 92 | 97 |
| 76 | 2.8 | 92 | 50, 52 |

Example 77

This Example illustrates a laboratory procedure for preparing such single phase polymers, and is based on the initial preparative steps found in Ugelstad and refined by our copending EP-A-269 324. A preform seed is used to prepare an oligomer seed, which in turn is used to prepare the initiator seed. The initiator seed is then added to the reactor, swelled with monomer and the polymerization initiated by heating the reactor to the desired temperature. The polymer shown herein is refractive-index-matched to poly(vinyl chloride).

(I) PREFORM SEED:

| MATERIAL | | Parts |
|---|---|---|
| (A) | Deionized (DI) water | 1912 |
| | Na2CO3 | 4.0 |
| (B) | Butyl acrylate | 1055.7 |
| | Butylene diacrylate | 2.7 |
| | Allyl methacrylate | 21.6 |
| | Sodium dodecylbenzene sulfonate, 10% solution (NaDDBS) | 54.0 |
| | DI water | 324.0 |
| | Rinse | 25 |
| | Rinse | 25 |
| (C) | Potassium persulfate (KPS) | 0.68 |
| | DI Water | 160.0 |
| | Rinse | 25 |
| | Rinse | 25 |

PROCEDURE

Solution (A) is charged to a suitable reaction vessel equipped with stirrer, nitrogen sparge, and means for addition of reagents during the reaction. The mixture is sparged with nitrogen, heated to 82°C with stirring, and held for one hour. 10% of the (B) charge and 25% of the (C) charge are added and held until 96% conversion is achieved. The remainder of feeds (B) and (C) are added through separate charging orifices over two hours while the temperature is maintained at 81 - 83°C; after feeds were complete, the mixture is maintained at 80°C for one hour, cooled and filtered through cheese cloth.

26

(II) OLIGOMER SEED

| MATERIALS | | GRAMS |
|---|---|---|
| (A) | DI Water<br>Na2CO3<br>(I) Preform seed | 1000.0<br>0.44<br>163.59 |
| (B) | BA<br>Styrene<br>NaDDBS (10% sol)<br>DI Water<br>Rinse | 443.15<br>98.39<br>13.54<br>150.0<br>25.0 |
| (C) | 1-Hexanethiol<br>NaDDBS (10% sol)<br>DI Water<br>Rinse | 101.78<br>15.41<br>51.0<br>25.0 |
| (D) | KPS<br>DI Water<br>Rinse | 0.58<br>90.0<br>25.0 |
| (E) | Chase t-Butylhydroperoxide, 70% (tBHP70X)<br>DI Water | 0.40<br>15.0 |
| (F) | Formopon (3% sol) | 9.0 |

To a reactor similar to that used for the initial seed is charged solution (A), which is then heated to 88°C and held for one hour with nitrogen sparging. The sparge is changed to a sweep, and in three separate streams are added mixtures (B), (C), and (D) over three hours. The mixture is held at 88°C for 90 minutes, cooled to 70°C, solutions (E) and (F) added, and the mixture stirred for 30 minutes longer. After cooling, the reaction mixture is filtered through cheese cloth.

(III) INITIATOR SEED

| MATERIALS | | GRAMS |
|---|---|---|
| (A) | NaDDBS (10% sol)<br>DI Water | 6.4<br>200.0 |
| (B)<br>(C) | t-Butyl peroctoate<br>(II) Oligomer Seed | 160.0<br>33.46 |

To a reactor similar to equipment but larger than that used for seed and oligomer preparations is charged (A) and (B), which mixture is stirred vigorously for five minutes at room temperature. The Oligomer Seed (C) is then charged and stirred for two hours at room temperature.

## (IV) SWELLING STEP

| MATERIALS | | GRAMS |
|---|---|---|
| (A) | Styrene | 633.6 |
| | BA | 390.72 |
| | ALMA | 31.68 |
| (B) | Siponate DS10 (10% sol) | 52.8 |
| | DI Water | 2000.0 |
| | p-Nitrosophenol, Mg salt | 0.136 |
| (C) | (III) Initiator Seed | 44.84 |

## PROCEDURE:

Solutions (A) and (B) are stirred together vigorously to form an emulsion. The emulsion is then charged to a Gaulin two-stage homogenizer set at 52.5 kg/cm$^2$ (stage I) and 350 kg/cm$^2$ (stage II) and admixed for at least five minutes to form a microemulsion of monomers. To a reactor similar to that used in the previous step is charged the microemulsion; it is stirred for five minutes while being sparged with nitrogen. The sparge is continued while the initiator seed is added. Vigorous stirring is employed for 5 minutes and slow stirring for 2.5 hours. The emulsion is checked by optical microscopy to see that swelling has been achieved.

The sparge is changed to a sweep, and the batch is heated to 80°C to initiate the polymerization. An increase in stirring speed may be employed. The reaction exotherm carries the temperature to 87°C. Fifteen minutes after the temperature reached 80°C, a feed of 22.6 parts of bis(tridecyl sodium sulfosuccinate) in 345 parts of water is begun over a two-hour period. The mixture is held at 80°C for one hour after completion of the emulsifier feed, and is cooled and filtered through cheese cloth.

| Example | Matrix | | Level of Modifier, phr | Barrel Temperatures, °C | | | |
|---|---|---|---|---|---|---|---|
| | | | | Feed | Center | Metering | Nozzel |
| 78 | Polycarbonate | (1) | 0 | 267 | 274 | 286 | 298 |
| 79 | " | | 2 | 267 | 274 | 286 | 298 |
| 80 | " | | 5 | 267 | 274 | 286 | 298 |
| 81 | Acrylic | (2) | 0 | 238 | 242 | 242 | 249 |
| 82 | " | | 2 | 238 | 242 | 242 | 249 |
| 83 | " | | 5 | 138 | 242 | 242 | 249 |
| 84 | Sty/MAnhyd | (3) | 0 | 238 | 242 | 242 | 249 |
| 85 | " | | 2 | 238 | 242 | 242 | 249 |
| 86 | Nylon 6 | (4) | 0 | 238 | 242 | 242 | 249 |
| 87 | " | | 2 | 238 | 242 | 242 | 249 |
| 88 | ABS | (5) | 0 | 238 | 242 | 242 | 249 |
| 89 | " | | 2 | 238 | 242 | 242 | 249 |
| 90 | " | | 5 | 238 | 242 | 242 | 249 |
| 91 | PBT | (6) | 0 | 238 | 242 | 242 | 249 |
| 92 | " | | 2 | 238 | 242 | 242 | 249 |
| 93 | " | | 5 | 238 | 242 | 242 | 249 |

Footnotes:

(1) Lexan 141, a bis-phenol-A-polycarbonate molding resin (General Electric).

(2) Plexiglas V-811, a poly(methyl methacrylate) of ca. 110,000 MW (Rohm and Haas).

(3) A styrene// 15% maleic anhydride copolymer containing a rubbery phase, Dylark 350 (Arco).

(4) Capron 8202, a polycaprolactam molding resin (Allied Corp.)

(5) A molding grade acrylonitrile/butadiene/styrene, Cyclolac GSE-1000 (Borg-Warner).

(6) A molding resin grade of poly(butylene terephthalate), Valox 315 (General Electric).

The results of Hunter and Gardner gloss, measured as described previously, are shown below. The styrene/maleic anhydride polymer had low gloss without the additive, but some improvement was seen when measured at 85 degrees. The effect on the nylon was minimal. The poly(butylene terephathalate) control had a very poor surface, which reduced gloss, but gloss reduction can be noted when the level of spherical particle additive was increased from two to five percent.

|  | | | | Gloss | | |
| Example | Matrix | Level of Modifier phr | Gardner 60°C | | Hunter |
|  | | | | 60°C | 85°C |
|---|---|---|---|---|---|
| 78 | Polycarbonate | 0 | 99.8 | 94.4 | 94.6 |
| 79 | " | 2 | 55.8 | 58.9 | 51.6 |
| 80 | | 5 | 33.1 | 40.4 | 35.8 |
| 81 | Acrylic | 0 | 85.5 | 87.2 | 99.8 |
| 82 | " | 2 | 65.2 | 67.5 | 87.2 |
| 83 | " | 5 | 39.1 | 37.3 | 50.3 |
| 84 | Sty/MAnhyd | 0 | 18.9 | 19.5 | 75.2 |
| 85 | " | 2 | 16.8 | 17.5 | 51.4 |
| 86 | Nylon 6 | 0 | 90.8 | 90.4 | 96.5 |
| 87 | " | 2 | 89.1 | 90.8 | 99.1 |
| 88 | ABS | 0 | 70.2 | 66.0 | 89.8 |
| 89 | " | 2 | 70.4 | 68.5 | 90.1 |
| 90 | " | 5 | 62.3 | 62.5 | 89.8 |
| 91 | PBT | 0 | 60.0  (7) | 54.5 | 72.5 |
| 92 | ". | 2 | 92.4 | 98.4 | 93.7 |
| 93 | " | 5 | 86.6 | 84.8 | 88.8 |

(7) Very poor surface on control sample.

Examples 94-96

These examples illustrate that levels up to 12% of the particulate polymers can be effective in preparation of a light-transmitting acrylic plastic with high hiding power. By the procedure of Examples 1, 39, 40 and 41, a particulate polymer was made of the composition (ignoring the particle-size setting steps) butyl acrylate 78/ butylene glycol diacrylate 0.40/ allyl methacrylate 1.6 // methyl methacrylate 19.2/ethyl acrylate 0.80. The particle size was five $\mu$m (microns). The polymer was isolated from the aqueous dispersion by coagulation with aqueous calcium hypophosphite coagulant and dried to remove residual water, and melt mixed with a commercial acrylic molding resin, believed to be of molecular weight about 110,000 and of composition MMA/EA = 96/4. The blended polymer was compression molded at 204°C into 12.7-cm-square plaques, and were evaluated for optical properties at room temperature by the method of Example 7. Three levels of particulate polymer were evaluated. The results are given in Table XVIII.

Table XVIII

| Poly(Methyl Methacrylate) and Polymer Particles | | | |
|---|---|---|---|
| Example | % of Modifier | Total Luminous Transmittance, % | Hiding Power |
| 94 | 5 | 93 | 1.0 |
| 95 | 9 | 92 | 1.0 |
| 96 | 12 | 91 | 1.0 |

Example 97

This example illustrates the preparation of a particulate polymer prepared in the absence of a crosslinking monomer in the core. By the procedure of Example 94 was prepared and isolated a core/shell particulate polymer of five micrometers particle size and of composition butyl acrylate 76.8/ allyl methacrylate 3.2 // methyl methacrylate 19.2/ethyl acrylate 0.80.

Examples 98 - 101

These examples illustrate blending of the modifier of Example 96 into an acrylic matrix by a masterbatching technique. The modifier of Example 96 (35 parts) was admixed with a commercial acrylic molding powder, believed to have a composition of MMA/EA - 95/5 and a MW of about 160,000. The materials were blended in a 25.4 mm. Killion extruder at a barrel temperature of 218 degrees C. A portion of the blend was saved for optical properties; other portions were further diluted with the commercial acrylic molding powder by re-extrusion under the same conditions to give the desired lower level of particulate polymer.

Table XIX

| Blends from Poly(methyl methacrylate)/Particle Masterbatch | |
|---|---|
| Blend | Wt. % Additive of Ex.92 |
| 94 | 35 |
| 95 | 15 |
| 96 | 8 |
| 97 | 1.3 |

Examples 102-108

These examples illustrate the effectiveness of a particulate polymer of this invention at high use levels to obtain a desirable balance of optical properties; it further illustrates the utility of such a particulate polymer in achieving optical properties deemed commercially acceptable for specific end-use applications. Plaques were molded from blends 98-101 at 232°C under conditions conventional for the molding powder without additives; plaques were about 3 mm. in thickness. These plaques were compared with acrylic sheet sold for various diffusive lighting uses; these acrylic sheets are essentially poly(methyl methacrylate) modified with either inorganic particles or polystyrene of non-uniform particle size. The match with commercial acceptable optical performance was noted. In the comparative examples, the plot of normalized intensity vs. angle in degrees was a very close parallel. Improved transmittance of light and less yellowness was noted while retaining the desired high haze levels.

## Table XX

### Optical Properties of Poly(methyl methacrylate) /Particle Blends Compared with Commercial Examples of Acrylic Sheet

| Utility | Example No. | Source | Total Luminous Transmittance % | Yellow- ness Index | Haze % |
|---|---|---|---|---|---|
| Lighting | 102-comparative | | 55 | +11.6 | 99.2 |
| | 103 | 99 | 72 | + 3.4 | 98.5 |
| Sign | 104-comparative | | 34 | +14.4 | 99.6 |
| | 105 | 98 | 60 | + 4.8 | 99.2 |
| Skylight | 106-comparative | | 78 | + 6.4 | 96.4 |
| | 107 | 100 | 86 | + 0.7 | 98.3 |
| | 104 | 97 | 87 | − 1.7 | 95.6 |

Examples 109-113

These examples illustrate the use of a particulate modifier of this invention to alter the optical properties of a polyglutarimide resin of refractive index 1.53. The core/shell polymer was prepared as taught in Example 33 of our copending EP-A-269 324; the refractive index of the core was 1.495, and the outer stage or shell was a copolymer of styrene/acrylonitrile 73/27. The core/shell ratio was 82:18. The matrix polymer was a polymer of methyl methacrylate reacted with methylamine by the procedure taught in Kopchik, US-A-4,246,374 to achieve a degree of imidization yielding a Vicat softening point for the polymer of ca. 150°C. The blends were prepared by extrusion on a single 2.54-cm. vented Killion extruder at a barrel temperature of 232°C, and then plaques of 3.3mm. thickness were molded on a Newbury reciprocating injection molding machine with 42 gram capacity at a barrel temperature of 260°C and a mold temperature of 99°C. Higher transmittance will be achieved if the refractive index of the core is raised to about 1.51.

Table XXI

| Optical Properties of Poly(methyl glutarimide)/Particle Blends | | | | |
|---|---|---|---|---|
| Example No. | Concentration of Particulate Modifier, wt.% | Total Luminous Transmittance,% | Hiding Power | Haze % |
| 109-control | 0 | 91 | 0.0045 | 7 |
| 110 | 0.5 | 68 | 0.23 | 89 |
| 111 | 1.0 | 59 | 0.71 | 97 |
| 112 | 1.5 | 54 | 1.0 | 99 |
| 113 | 2.0 | 50 | 1.0 | 99 |

Examples 114-117

Examples 114-117 illustrate the use of such particulate polymers to achieve good optical reference control with little sacrifice in total white light transmission and with retention of impact performance in an impact-modified clear acrylic plastic. The modifier of Example 97 was admixed at the 3, 5 and 10 phr level with pellets of a commercial impact-modified acrylic polymer, believed to be a butyl acrylate// methyl methacrylate core-shell impact modifier dispersed in a matrix which is mainly poly(methyl methacrylate). Admixing was carried out in two stages; a master-batch of 30 phr particle polymer was prepared at a melt and die temperature of 232 degrees C in the equipment described in Example 98, and the master-batch was then re-extruded with more commercial impact-modified acrylic polymer under similar conditions to obtain the final mixture. As control was used an untoned version of the commercial impact-modified acrylic polymer.

Plaques of these blends and a control were prepared at 3.175 mm. thickness by injection molding into an ASTM mold. Conditions were:

temperatures--nozzle, front and rear barrels all at 232°C; RPM--200; die temperature--93°C; injection cycle--15 sec. at 300 MegaPascals. Impact and modulus data were measured by standard ASTM methods.

Table XXII-A

| Impact-Modified Poly(Methyl Methacrylate and Polymer Particles | | | | |
|---|---|---|---|---|
| Optical Properties | | | | |
| Example No. | Particulate Polymer, phr | Total Luminous Transmittance % | Yellowness Index | Haze % |
| 114-control | 0 | 89.0 | -0.56 | 1.9 |
| 115 | 3 | 87.7 | + 4.85 | 97.3 |
| 116 | 5 | 87.2 | + 6.08 | 97.8 |
| 117 | 10 | 81.7 | + 9.04 | 98.1 |

34

Table XXII-B

| Impact-Modified Poly(Methyl Methacrylate) and Polymer Particles | | | | |
|---|---|---|---|---|
| Physical Properties | | | | |
| Example No. | Particulate Polymer, phr | Notched Izod, kg.cm./cm | | Tensile moduus, MegaPascals |
| | | A | B | |
| 114-control | 0 | 5.4 | 2.7 | 1930 |
| 115 | 3 | 5.4 | 3.3 | 1906 |
| 116 | 5 | 5.4 | 3.3 | 1913 |
| 117 | 10 | 5.4 | 3.8 | 1791 |
| Condition A; at 23 degrees C; condition B: at 0 degrees C. | | | | |

Example 118

The following example discribes another method which may be used to prepare uniform butyl acrylate/allyl methacrylate terpolymer particles of ca. 1.25 micrometer particle size and narrow particle size distribution. Emulsifier A was sodium dodecylbenzene sulfonate. Emulsifier B was the ammonium salt of sulfated nonylphenoxypoly(ethoxy) ethanol. Emulsifier C was bis(tridecyl) sodium sulfosuccinate. Water refers to deionized water. Particle sizes were measured by Nanosizer when below 1 micrometer; larger particle sizes were measured by optical microscope, uniformity being judged by examination of photographs.

Step 1:

In a suitable reactor, equipped with a means for heating the exterior, a means for addition of initiator and monomer, a nitrogen sweep, a reflux condenser and stirrer, was prepared an emulsion copolymer of butyl acrylate/methyl methacrylate/methacrylic acid 50/48/2, initiated with ammonium persulfate at temperatures above 80°C, and with 0.6% Emulsifier A. The particle size was essentially monodisperse and measured as 0.147 micrometers.

Step 2:

To a reactor equipped as in Step 1 was charged:

| Emulsion of Step 1 | 55.6 parts |
|---|---|
| Water | 2306 |

The mix was heated with stirring to 80°C, and 5 parts sodium persulfate in 40 parts water added. After 10 minutes, a mixture of 420 parts butyl methacrylate, 580 parts of methyl methacrylate, and 20 parts of methacrylic acid were added were added uniformly over a two hour period; stirring was at 140 rpm. The monomer feed line was rinsed with 30 parts of water, the reaction temperature maintained at 80°C for 40 minutes more, cooled, and filtered. A narrow particle size emulsion of 0.514 micrometers was obtained.

Step 3:

In a monomer feed tank was prepared an emulsion of

| | |
|---|---|
| Water | 300 parts |
| Emulsifier B | 9 |
| Styrene | 540 |
| Butyl acrylate | 333 |
| Allyl methacrylate | 27 |
| t-Butyl peroctoate | 9 |

To a reactor equipped with stirrer, relux condenser, nitrogen sparge inlet, and two means for introducing feed streams was charged:

| | |
|---|---|
| Water | 1700 parts |
| Ammonia, aqueous | 5 |
| Magnesium p-nitrosophenolate, 0,5% solution | 15.2 |

The contents of the reactor were heated with stirring under nitrogen to 85°C. The following was added under a blanket of nitrogen:

| | |
|---|---|
| Emulsion of Step 2 | 752.5 parts |
| Water rinse | 24.3 |

The monomer emulsion was then added uniformly over a period of 4 hours at a stirring rate of 120 rpm, the temperature being maintained at 85°c. On completion of monomer feed, the monomer emulsion tank was rinsed with 30 parts water. The polymerization mixture was maintained at 85°c. throughout the feed and for 1 hour after completion of the feed, cooled, and filtered through a 325 mesh (0.045mm) screen. The particle size was 0.74 micrometers.

Step 4:

In a monomer feed tank was prepared an emulsion of

| | |
|---|---|
| Water | 300 parts |
| Emulsifier B | 9 |
| Styrene | 540 |
| Butyl acrylate | 333 |
| Allyl methacrylate | 27 |
| t-Butyl peroctoate | 9 |

To a reactor equipped with stirrer, reflux condenser, nitrogen sparge inlet, and two means for introducing feed streams was charged:
To a reactor equipped with stirrer, reflux condenser, nitrogen sparge inlet, and two means for introducing feed streams was charged:

| | |
|---|---|
| Water | 1670 parts |
| Ammonia, aqueous | 5 |
| Manesium p-nitrosophenolate, 0.5% solution | 15.2 |

The contents of the reactor were heated with stirring under nitrogen to 85°C. The following was added under a blanket of nitrogen:

| Emulsion of Step 4 | 478.8 parts |
|---|---|
| Water rinse | 20 |

The monomer emulsion was then added uniformly over a period of 4 hours at a stirring rate of 120 rpm, the temperature being maintained at 85°C. After 2.5 hours, the feed of diluted Emulsifier C was added over a period of 2 hours. On completion of feeds, the monomer emulsion tank was rinsed with 30 parts water, and the tank containing Emulsifier C rinsed with 20 parts of water, both of which being added to the reaction mixture. The polymerization mixture was maintained at 85°C throughout the feeds and for 0.5 hours after competion of all feeds, cooled, and filtered through a 0.045 mm (325 mesh) screen. The particle size was 1.25 micrometers.

| Water | 1690 parts |
|---|---|
| Ammonia, aqueous | 5 |
| Magnesium p-nitrosophenolate, phenolate, 0.5% solution | 15.2 |

The contents of the reactor were heated with stirring under nitrogen to 85°C. The following was added under a blanket of nitrogen:

| Emulsion of Step 3 | 439.4 parts |
|---|---|
| Water rinse | 27.4 |

The monomer emulsion was then added uniformly over a period of 3 hours at a stirring rate of 120 rpm, the temperature being maintained at 85°C. On completion of monomer feed, the monomer emulsion tank was rinsed with 30 parts water. The polymerization mixture was maintained at 85°C throughout the feed and for 1 hour after completion of the feed, cooled, and filtered through a 0.045 mm (325 mesh) screen. The particle size was 0.96 micrometers.

Step 5:

In a monomer feed tank was prepared an emulsion of:

| Water | 300 parts |
|---|---|
| Emulsifier B | 2.7 |
| Styrene | 540 |
| Butyl acrylate | 333 |
| Allyl methacrylate | 27 |
| t-Butyl peroctoate | 9 |

In a separate feed tank was prepared a mixture of

| Emulsifier C | 9 |
|---|---|
| Water | 105 |

The polymer dispersion was added to poly(vinyl chloride) in the manner of Examples 51 - 65. The effect on surface reflectance was almost identical to that noted in Ex. 56 of that series.

| Example | Level of Additive | Hunterlab Gloss | |
|---|---|---|---|
| | | 60° | 85° |
| A | none (control) | 73.4 | 80.5 |
| B | 1.0 | 37.3 | 47.5 |
| C | 2.0 | 33.8 | 45.6 |

It is expected that one or two additional repetitions of Step 5 will bring the particle size into a range which will match the values for a commercial flatting agent at equivalent or lower use levels, and reach the desired values of particle size range while maintaining particle size range and uniformity.

In the following examples, water refers to deionized water. Particle sizes were measured by Nanosizer when below one micrometer; larger particle sizes were measured by optical microscope, uniformity being judged by examination of photographs.

Example 119

The following example illustrates the preparation of styrene 95/divinylbenzene 5 copolymer particles of ca. 5 micrometer particle size and narrow particle size distribution. Emulsifier A was the ammonium salt of sulfated nonylphenoxypoly(ethoxy) ethanol.

Divinylbenzene was a commercial grade of ca. 55% divinylbenzene content, the remainder being mainly ethylvinylbenzene.

Step 1:

To a suitable reactor equipped with a means for heating the exterior, a means for addition of initiator and monomer, a nitrogen sweep, a reflux condenser, and stirrer was charged.

| | |
|---|---|
| Water | 791 parts |
| Styrene | 200 |
| Dihexyl sodium sulfosuccinate | 7.5 |
| Soldium bicarbonate | 1 |

The contents were heated to 80°C under a nitrogen sweep, the stirring increased to 200 rpm, a one part of sodium persulfate initiator in 20 parts of water added. The mixture was maintained at 80°C for 5.5. hours with stirring, heated to 90°C for 30 minutes, cooled and filtered. The particle size was 266 mn and was narrow.

Step 2:

To a reactor equipped as in Step 1 was charged:

| | |
|---|---|
| Emulsion of Step 1 | 510.9 parts |
| Water | 1372 |

The mix was heated with stirring to 85°C, 3.5 parts sodium persulfate in 60 parts water added. After 15 minutes, 700 parts of styrene were added uniformly over a 1 hours period; stirring was at 250 rpm. The monomer feed line was rinsed with 30 parts of water, the reaction temperature maintained at 85°C for 90 minutes more, cooled, filtered, and treated with 2 parts of aqueous ammonia. A narrow particle size emulsion of 525 nm. was obtained.

Step 3:

To a similarly-equipped reactor was charged:

| Emulsion of Step 2 | 437.7 parts |
|---|---|
| Water | 2037.7 |

The mix was heated with stirring to 85°C, 4.6 parts sodium persulfate in 60 parts water added. After 15 minutes, 910 parts of styrene were added uniformly over a 1 hour period; stirring was at 250 rpm. The monomer feed line was rinsed with 30 parts of water, the reaction temperature maintained at 85°C for 90 minutes more, cooled, filtered, and treated with 2 parts of aqueous ammonia. A narrow particle size emulsion of 1.02 micrometers was obtained.

Step 4:

To a similarly-equipped reactor was charged:

| Emulsion of Step 3 | 675.7 parts |
|---|---|
| Water | 1734.4 |

The mix was heated with stirring to 85°C, 4.0 parts sodium persulfate in 70 parts water added. After 15 minutes, 800 parts of styrene were added uniformly over a 1 hour period; stirring was at 250 rpm. After 110 minutes, a co-feed of a solution of 4 parts sodium persulfate in 40 parts water was begun over a 24-minute period. The monomer feed line was rinsed with 30 parts of water, the reaction temperature maintained at 85°C for 90 minutes more, cooled, filtered, and treated with 4.5 parts of aqueous ammonia. A narrow particle size emulsion of 1.77 micrometers was obtained.

Step 5:

In a monomer feed tank was prepared an emulsion of

| Water | 270 parts |
|---|---|
| Emulsifier A | 1.6 |
| Styrene | 212.5 |
| Divinylbenzene | 27.5 |
| Benzoyl peroxide | 2.4 |

To a similarly-equipped reactor was charged:

| Emulsion of Step 4 | 668.9 parts |
|---|---|
| Water | 1583.1 |
| Emulsifier A | 21.3 |

The contents of the reactor were heated with stirring under nitrogen to 85°C. The monomer emulsion was then added uniformly over a period of 5 hours at a stirring rate of 180 rpm, the temperature being maintained at 85°C. The monomer tanked was rinsed with 30 parts water, the polymerization mixture maintained at 85°C for one hour, cooled, filtered through a 325 mesh (0.045 mm) screen, and 1.5 parts aqueous ammonia added. The particle size was 3.06 micrometers; less than 0.5% oversize particles were observed.

Step 6:

In a monomer feed tank was prepared an emulsion of

| Water | 80 parts |
|---|---|
| Emulsifier A | 1.6 |
| Styrene | 212.5 |
| Divinylbenzene | 27.5 |
| Benzoyl peroxide | 2.4 |

To a similarly-equipped reactor was charged:

| Emulsion of Step 5 | 422.9 parts |
|---|---|
| Water | 252.7 |
| Emulsifier A | 6.4 |

The contents of the reactor were heated with stirring under nitrogen to 85°C. The monomer emulsion was then added uniformly over a period of 6 hours at a stirring rate of 180 rpm, the temperature being maintained at 85°C. The monomer tanked was rinsed with 30 parts water, the polymerization mixture maintained at 85°C for one hour, cooled, filtered through a 325 mesh (0.045 mm), and 1.5 parts aqueous ammonia added. The particle size was 5.0 micrometers; about 1% oversize particles are observed.

The particles can be admixed with polystyrene in a manner similar to the process disclosed for admixture with poly(vinyl chloride) in the previous example and will produce a matted surface.

The following are trademarks which may be registered in some or all designated states: Hunterlab, Nanosizer, Killion, Newbury, Cyclolac, Dylark, Capro, Valox, Glossard, Rheocord, Rheomix Haake.

**Claims**

1. A thermoplastic or thermoset polymer composition comprising thermoplastic or thermoset matrix polymer and, dispersed therein, from 0.1 to 40% by weight of the total composition of substantially spherical polymer particles having an average diameter of from 2 to 15 micrometers and a particle size distribution such that at least 90% by weight of the particles fall within ± 20% of the average particle diameter; subject to the proviso that when said polymer composition is a light-scattering composition based on a thermoplastic polymer matrix and the spherical polymer particles comprise from 0.1 to 10% of the total composition weight, the spherical polymer particles are not core/shell polymers having a core of rubbery alkyl acrylate polymer, the alkyl group having from 2 to 8 carbon atoms, copolymerised with 0 to 50% copolymerisable vinyl monomer, 0 or up to 5% crosslinker and 0 or up to 5% graftlinker (based on the total weight of the core) and a refractive index ($n_D^{25}$) within ± 0.2 units of, but preferably no closer than ± 0.003 units to, the refractive index of the matrix polymer, and one or more polymer shells, the outermost of which is compatible with the matrix polymer, which shell(s) comprises 5 to 40% of the weight of the particles.

2. A thermoplastic or thermoset polymer composition as claimed in Claim 1, wherein said thermoplastic or thermoset matrix polymer is substantially amorphous.

3. A thermoplastic or thermoset polymer composition as claimed in Claim 2, wherein said spherical polymer particles comprise only a single polymeric phase and have a refractive index ($n_D^{25}$) within ± 0.2 units of, but preferably no closer than ± 0.003 units to, the refractive index of the matrix polymer.

4. A thermoplstic or thermoset polymer composition as claimed in Claim 2, wherein said spherical polymer particles comprise core/shell polymer having a core polymer which has a refractive index ($n_D^{25}$) within ± 0.2 units of, but preferably no closer than ± 0.003 units to, the refractive index of the matrix polymer.

5. A thermoplastic or thermoset polymer composition as claimed in Claim 3 or Claim 4, wherein said single polymeric phase or said core polymer is a rubbery alkyl acrylate polymer, the alkyl group having

40

from 2 to 8 carbon atoms, copolymerised with 0 or up to 10% crosslinker and 0 or up to 10% graftlinker (based on the total weight of the single polymeric phase or the core).

6. A thermoplastic or thermoset polymer composition as claimed in Claim 1 or Claim 2, wherein said spherical polymer particles comprise 0.1 to 10% by weight of the total composition.

7. A thermoplastic or thermoset polymer composition as claimed in any one of Claims 1, 2 or 6, wherein said spherical polymer particles comprise only a single polymeric phase.

8. A thermoplastic or thermoset polymer composition as claimed in any one of Claims 1, 2 or 6, wherein said spherical polymer particles comprise core/shell polymer.

9. A thermoplastic or thermoset polymer composition as claimed in Claim 8, wherein said core/shell polymer comprises a polymeric core phase and one or more polymeric shell phases, the outermost of which is compatible with the matrix polymer, which shell phase or phases comprise from 5 to 40% of the weight of the particles.

10. A thermoplastic or thermoset polymer composition as claimed in Claim 6, 8 or 9 when dependent on Claim 2, wherein said single polymeric phase or the polymeric core phase of the core/shell polymer has a refractive index ($n_D^{25}$) within ± 0.003 units of the refractive index of the matrix polymer.

11. A thermoplastic or thermoset polymer composition as claimed in any one of Claims 7 to 10, wherein said single polymeric phase or said core polymer is a rubbery alkyl acrylate polymer, the alkyl group having from 2 to 8 carbon atoms, copolymerised with 0 or up to 10% crosslinker and 0 or up to 10% graftlinker (based on the total weight of the single polymeric phase or the core polymer).

12. A process for preparing a thermoplastic or thermoset polymer composition comprising thermoplastic, or thermoset matrix polymer and substantially spherical polymer particles, comprising only a single polymeric phase, said single phase polymer particles having an average diameter of from 2 to 15 $\mu$m and a particle size distribution such that at least 90% by weight of the particles fall within ± 20% of the average particle diameter, wherein the process comprises:
   A) polymerizing a first aqueous emulsion of one or more monomers which, when polymerized, produce a particulate composition comprising polymer particles;
   B)
      1. swelling the particles of the particulate composition produced in A), or if appropriate the particles of B2), with one or more monomers, and
      2. polymerizing the swelling monomer within the particles until all of the monomers have been polymerized,
   steps B1 and B2 being repeated, if necessary, until at least 90% by weight of the particles of the particulate composition fall within ± 20% of a desired size, in which case such particles are to be referred to as single phase polymer particles, and blending said single phase polymer particles, in an amount of 0.1 to 40% by weight of the total composition, with said matrix polymer.

13. A process as claimed in Claim 12 wherein the polymerization of step A) is conducted under conditions that form the emulsion polymer as an easily swellable oligomer, preferably conditions including the presence of a chain-transfer moderator, for example a mercaptan.

14. A process as claimed in Claim 12 or 13, wherein one or more polymerizations of step B-2) are conducted under conditions that form a readily swellable oligomer from the swelling monomer, preferably conditions including the presence of a chain-transfer moderator, for example a mercaptan.

15. A process as claimed in any one of Claims 12, 13 or 14, wherein said single phase polymer particles comprise a rubbery alkyl acrylate polymer, the alkyl group having from 2 to 8 carbon atoms, copolymerised with 0 or up to 10% crosslinker and 0 or up to 10% graftlinker (based on the total weight of the particles).

16. A process as claimed in any one of claims 12 to 15, wherein said matrix polymer is substantially amorphous.

**17.** A process as claimed in Claim 16, wherein said single phase polymeric particles have a refractive index ($n_D^{25}$) within ± 0.2 units of the refractive index of the matrix polymer.

**18.** Use of substantially spherical polymer particles in the formation of a light-scattering and/or reduced-gloss finish thermoplastic or thermoset polymer composition comprising a thermoplastic or thermoset matrix polymer and said spherical polymer particles, wherein said particles have an average diameter of from 2 to 15 $\mu$m, a particle size distribution such that at least 90% by weight of the particles fall within ± 20% of the average particle diameter; subject to the proviso that when said polymer composition is a light-scattering composition based on a thermoplastic polymer matrix and the spherical polymer particles comprise from 0.1 to 10% of the total composition weight, the spherical polymer particles are not core/shell polymers having a core of rubbery alkyl acrylate polymer, the alkyl group having from 2 to 8 carbon atoms, copolymerised with 0 to 50% copolymerisable vinyl monomer, 0 or up to 5% crosslinker and 0 or up to 5% graftlinker (based on the total weight of the core) and a refractive index ($n_D^{25}$) within ± 0.2 units of, but preferably no closer than ± 0.003 units to, the refractive index of the matrix polymer, and one or more polymer shells, the outermost of which is compatible with the matrix polymer, which shell(s) comprises 5 to 40% of the weight of the particles.

**19.** Use, in sheet or moulded form, of a thermoplastic or thermoset polymer composition as claimed in any one of Claims 1 to 11; or as prepared in Claims 12 to 17, as, or as a component of, a luminaire, a rear projection screen for e.g. television or film viewing, a decoration, an illuminated sign, a skylight, a lighting fixture, greenhouse glazing, a light box, a drafting table, an automotive part, e.g. a sun-roof or a cover for automotive lights, an artistic application, an antiglow screen for a CTR unit or a twin-wall glazing.

**Patentansprüche**

**1.** Thermoplastische oder wärmehärtbare Polymer-Zusammensetzung, umfassend eine thermoplastische oder wärmehärtbare Polymer-Matrix und darin dispergierte, 0,1 bis 40 Gew.-% der Gesamtzusammensetzung, von im wesentlichen kugeligen Polymer-Partikeln mit einem Durchschnittsdurchmesser von 2 bis 15 $\mu$m und einer Partikelgrößenverteilung derart, daß mindestens 90 Gew.-% der Partikel innerhalb von ± 20 % des Durchschnittspartikeldurchmessers liegen, mit der Maßgabe, daß, wenn die Polymer-Zusammensetzung eine Licht-streuende Zusammensetzung auf der Basis einer thermoplastischen Polymer-Matrix ist und die kugeligen Polymer-Partikel 0,1 bis 10 % des Gesamtzusammensetzungsgewichts umfassen, die kugeligen Polymer-Partikel keine Kern-/Hüll-Polymere sind, die einen Kern aus einem gummiartigen Alkylacrylat-Polymer, wobei der Alkyl-Rest 2 bis 8 C-Atome hat, die mit 0 bis 50 % eines copolymerisierbaren Vinyl-Monomers, mit 0 oder bis 5 % eines Vernetzers und 0 oder bis 5 % eines Pfropflinkers (basierend auf dem Gesamtgewicht des Kerns) copolymerisiert sind, und einen Brechungsindex ($n_D^{25}$) von innerhalb von ± 0,2 Einheiten der, jedoch vorzugsweise von nicht näher als ± 0,003 Einheiten zu dem Brechungsindex der Polymer-Matrix und ein oder mehrere Polymer-Hüllen haben, von denen die äußerste mit der Polymer-Matrix kompatibel ist, wobei die Hülle bzw. Hüllen 5 bis 40 Gew.-% der Partikel umfaßt bzw. umfassen.

**2.** Thermoplastische oder wärmehärtbare Polymer-Zusammensetzung nach Anspruch 1, worin die thermoplastische oder wärmehärtbare Polymer-Matrix im wesentlichen amorph ist.

**3.** Thermoplastische oder wärmehärtbare Polymer-Zusammensetzung nach Anspruch 2, worin die kugeligen Polymer-Partikel nur eine einzelne polymere Phase umfassen und einen Brechungsindex ($n_D^{25}$) von innerhalb von ± 0,2 Einheiten des, jedoch vorzugsweise von nicht näher als ± 0,003 Einheiten zu dem Brechungsindex der Polymer-Matrix haben.

**4.** Thermoplastische oder wärmehärtbare Polymer-Zusammensetzung nach Anspruch 2, worin die kugeligen Polymer-Partikel ein Kern-/Hüll-Polymer mit einem Kern-Polymer umfassen, das einen Brechungsindex ($n_D^{25}$) von innerhalb von ± 0,2 Einheiten des, jedoch vorzugsweise von nicht näher als ± 0,003 Einheiten zu dem Brechungsindex der Polymer-Matrix hat.

**5.** Thermoplastische oder wärmehärtbare Polymer-Zusammensetzung nach Anspruch 3 oder 4, worin die einzelne polymere Phase oder das Kern-Polymer ein gummiartiges Alkylacrylat-Polymer ist, wobei der Alkyl-Rest 2 bis 8 C-Atome hat, die mit 0 oder bis 10 % eines Vernetzers und 0 oder bis 10 % eines

42

Pfropflinkers (basierend auf dem Gesamtgewicht der einzelnen, polymeren Phase oder des Kerns) copolymerisiert sind.

6. Thermoplastische oder wärmehärtbare Polymer-Zusammensetzung nach Anspruch 1 oder 2, worin die kugeligen Polymer-Partikel 0,1 bis 10 Gew.-% der Gesamtzusammensetzung umfassen.

7. Thermoplastische oder wärmehärtbare Polymer-Zusammensetzung nach einem der Ansprüche 1, 2 oder 6, worin die kugeligen Polymer-Partikel nur eine einzelne polymere Phase umfassen.

8. Thermoplastische oder wärmehärtbare Polymer-Zusammensetzung nach einem der Ansprüche 1, 2 oder 6, worin die kugeligen Polymer-Partikel ein Kern-/Hüll-Polymer umfassen.

9. Thermoplastische oder wärmehärtbare Polymer-Zusammensetzung nach Anspruch 8, worin das Kern-/Hüll-Polymer eine polymere Kern-Phase und ein oder mehrere polymere Hüll-Phasen umfaßt, von denen die äußerste mit der Polymer-Matrix kompatibel ist, wobei die Hüll-Phase bzw. die Hüll-Phasen 5 bis 40 Gew.-% der Partikel umfaßt bzw. umfassen.

10. Thermoplastische oder wärmehärtbare Polymer-Zusammensetzung nach einem der Ansprüche 6, 8 oder 9 in Abhängigkeit von Anspruch 2, worin die einzelne polymere Phase oder die polymere Kernphase des Kern-/Hüll-Polymers einen Brechungsindex ($n_D^{25}$) von innerhalb von ± 0,003 Einheiten des Brechungsindex der Polymer-Matrix hat.

11. Thermoplastische oder wärmehärtbare Polymer-Zusammensetzung nach einem der Ansprüche 7 bis 10, worin die einzelne polymere Phase oder das Kern-Polymer ein gummiartiges Alkylacrylat-Polymer ist, wobei der Alkyl-Rest 2 bis 8 C-Atome hat, die mit 0 oder bis 10 % eines Vernetzers und 0 oder bis 10 % eines Pfropflinkers (basierend auf dem Gesamtgewicht der einzelnen polymeren Phase oder des Kern-Polymers ) copolymerisiert sind.

12. Verfahren zur Herstellung einer thermoplastischen oder wärmehärtbaren Polymer-Zusammensetzung, umfassend eine thermoplastische oder wärmehärtbare Polymer-Matrix und im wesentlichen kugelige Polymer-Partikel, umfassend nur eine einzelne polymere Phase, wobei die Polymer-Teilchen der einzelnen Phase einen Durchschnittsdurchmesser von 2 bis 15 $\mu$m und eine Partikelgrößenverteilung derart haben, daß mindestens 90 Gew.-% der Partikel innerhalb von ± 20 % des durchschnittlichen Partikeldurchmessers liegen, bei dem:
   (A) eine erste wäßrige Emulsion eines oder mehrerer Monomere polymerisiert wird, die dann nach Polymerisierung eine partikuläre, Polymer-Partikel umfassende Zusammensetzung ausbilden,
   (B)
      1. die Partikel der in (A) produzierten partikulären Zusammensetzung oder, wenn geeignet, die Partikel von (B2) mit ein oder mehreren Monomeren gequollen werden, und
      2. das quellende Monomer innerhalb der Partikel polymerisiert wird, bis alle Monomeren polymerisiert worden sind,
      wobei die Schritte B1 und B2 wiederholt werden, wenn nötig, bis mindestens 90 Gew.-% der Partikel der partikulären Zusammensetzung innerhalb von ± 20 % einer gewünschten Größe liegen, wo dann solche Partikel Polymer-Partikeln einer einzelnen Phase zugeschrieben werden und Polymer-Partikel der einzelnen Phase in einer Menge von 0,1 bis 40 Gew.-% der Gesamtzusammensetzung mit der Polymer-Matrix vermengt werden.

13. Verfahren nach Anspruch 12, worin die Polymerisation von Schritt (A) unter Bedingungen durchgeführt wird, die das Emulsions-Polymer als ein leicht quellbares Oligomer ausbilden, vorzugsweise unter Bedingungen, einschließlich der Gegenwart eines Kettenübertragungsmoderators, beispielsweise eines Mercaptans.

14. Verfahren nach einem der Ansprüche 12 oder 13, worin ein oder mehr Polymerisationen von Schritt (B-2) unter Bedingungen durchgeführt werden, die aus dem quellenden Monomer ein leicht quellbares Oligomer ausbilden, vorzugsweise unter Bedingungen, einschließlich der Gegenwart eines Kettenübertragungsmoderators, beispielsweise eines Mercaptans.

**15.** Verfahren nach einem der Ansprüche 12, 13 oder 14, worin die Polymer-Partikel der einzelnen Phase ein gummiartiges Alkylacrylat-Polymer umfassen, wobei der Alkyl-Rest 2 bis 8 C-Atome hat, die mit 0 oder bis 10 % eines Vernetzers und 0 oder bis 10 % eines Pfropflinkers (basierend auf dem Gesamtgewicht der Partikel) copolymerisiert sind.

**16.** Verfahren nach einem der Ansprüche 12 bis 15, worin die Polymer-Matrix im wesentlichen amorph ist.

**17.** Verfahren nach Anspruch 16, worin die polymeren Partikel der einzelnen Phase einen Brechungsindex ($n_D^{25}$) von innerhalb von ± 0,2 Einheiten des Brechungsindex der Polymer-Matrix haben.

**18.** Verwendung von im wesentlichen kugeligen Polymer-Partikeln zur Ausbildung einer Licht-streuenden und/oder eine verminderte Glanzappretur aufweisenden thermoplastischen oder wärmehärtbaren Polymer-Zusammensetzung, umfassend eine thermoplastische oder wärmehärthärtbare Polymer-Matrix und die kugeligen Polymer-Partikel, worin die Partikel einen Durchschnittsdurchmesser von 2 bis 15 $\mu$m und eine Partikelgrößenverteilung derart haben, daß mindestens 90 Gew.-% der Partikel innerhalb von ± 20 % des Durchschnittspartikeldurchmessers liegen, mit der Maßgabe, daß wenn, die Polymer-Zusammesetzung eine Licht-streuende Zusammensetzung auf der Basis einer thermoplastischen Polymer-Matrix ist und die kugeligen Polymer-Partikel 0,1 bis 10 % des gesamten Zusammensetzungsgewichts umfassen, die kugeligen Polymer-Partikel keine Kern-/Hüll-Polymere sind, die einen Kern aus einem gummiartigen Alkylacrylat-Polymer, wobei der Alkyl-Rest 2 bis 8 C-Atome hat, die mit 0 bis 50 % eines copolymerisierbaren Vinyl-Monomers, mit 0 oder bis 5 % eines Vernetzers und mit 0 oder bis 5 % eines Pfropflinkers (basierend auf dem Gesamtgewicht des Kerns) copolymerisiert sind und einen Brechungsindex ($n_D^{25}$) von innerhalb von ± 0,2 Einheiten des, jedoch vorzugsweise von nicht näher als ± 0,003 Einheiten zu dem Brechungsindex der Polymer-Matrix und ein oder mehrere Polymer-Hüllen haben, von denen die äußerste mit der Polymer-Matrix kompatibel ist, wobei die Hülle bzw. Hüllen 5 bis 40 Gew.-% der Partikel umfaßt bzw. umfassen.

**19.** Verwendung in Blatt- oder Preßform einer thermoplastischen oder wärmehärtbaren Polymer-Zusammensetzung nach einem der Ansprüche 1 bis 11 oder hergestellt nach den Ansprüchen 12 bis 17 als oder als Komponente eines Leuchtkörpers, eines Rückprojektionsschirms, z.B. für Fernseh- oder Filmbetrachtung, einer Verzierung, eines Leuchtzeichens, eines Oberlichtes, einer Beleuchtungsbefestigung, einer Treibhausverglasung, eines Leuchtkastens, eines Zeichentisches, eines Autoteiles, z.B. eines Sonnendachs oder einer Autolichtabdeckung, einer künstlerischen Anwendung, eines Antiglühschirmes für eine CTR-Einheit oder einer Doppelwand-Verglasung.

**Revendications**

**1.** Composition polymère thermoplastique ou thermodurcissable, comprenant un polymère de matrice thermoplastique ou thermodurcissable et, en dispersion dans ce dernier, de 0,1 à 40 % en poids, par rapport à la composition totale, de particules polymères essentiellement sphériques ayant un diamètre moyen de 2 à 15 $\mu$m et une répartition granulométrique telle qu'au moins 90 % en poids des particules aient une granulométrie s'écartant de moins de 20 %, dans un sens ou dans l'autre, du diamètre moyen des particules ; du moment que, quand ladite composition polymère est une composition diffusant la lumière, à base d'une matrice polymère thermoplastique, et que les particules polymères sphériques comptent pour 0,1 à 10 % en poids de la composition totale, les particules polymères sphériques ne sont pas des polymères du type coeur/gaine ayant un coeur en un polymère caoutchouteux d'acrylate d'alkyle, le groupe alkyle ayant de 2 à 8 atomes de carbone, copolymérisé avec 0 à 50 % d'un monomère vinylique copolymérisable, avec 0 ou jusqu'à 5 % d'un agent de réticulation, et avec 0 ou avec jusqu'à 5 % d'un agent de greffage (par rapport au poids total du coeur), et un indice de réfraction ($n_D^{25}$) s'écartant, dans un sens ou dans l'autre, au plus de 0,2 unite mais de préférence au moins de 0,003, unité, de l'indice de réfraction du polymère de matrice, et une ou plusieurs gaines polymères, dont celle qui est située le plus à l'extérieur est compatible avec le polymère de matrice, laquelle ou lesquelles gaines comptent pour 5 à 40 % du poids des particules.

**2.** Composition polymère thermoplastique ou thermodurcissable selon la revendication 1, dans laquelle ledit polymère de matrice thermoplastique ou thermodurcissable est essentiellement amorphe.

3. Composition polymère thermoplastique ou thermodurcissable selon la revendication 2, dans laquelle lesdites particules sphériques de polymère ne comportent qu'une phase polymère unique et ont un indice de réfraction ($n_D^{25}$) qui s'écarte de l'indice de réfraction du polymère de matrice, dans un sens ou dans l'autre, au plus de 0,2 unité, mais de préférence au moins de 0,003 unité.

4. Composition polymère thermoplastique ou thermodurcissable selon la revendication 2, dans laquelle lesdites particules sphériques de polymère comprennent un polymère du type coeur/gaine ayant un polymère de coeur qui a un indice de réfraction ($n_D^{25}$) qui s'écarte de l'indice de réfraction du polymère de matrice, dans un sens ou dans l'autre, au plus de 0,2 unité, mais de préférence au moins de 0,003 unité.

5. Composition polymère thermoplastique ou thermodurcissable selon la revendication 3 ou 4, dans laquelle ladite phase polymère unique ou ledit polymère de coeur est un polymère caoutchouteux d'acrylate d'alkyle, le groupe alkyle ayant de 2 à 8 atomes de carbone, copolymérisé avec 0 ou jusqu'à 10 % d'un agent de réticulation et avec 0 ou jusqu'à 10 % d'un agent de greffage (par rapport au poids total de la phase polymère unique ou du coeur.

6. Composition polymère thermoplastique ou thermodurcissable selon la revendication 1 ou 2, dans laquelle lesdites particules sphériques de polymère comptent pour 0,1 à 10 % en poids de la composition totale.

7. Composition polymère thermoplastique ou thermodurcissable selon l'une quelconque des revendications 1, 2 ou 6, dans laquelle lesdites particules sphériques de polymère ne comportent qu'une phase polymère unique.

8. Composition polymère thermoplastique ou thermodurcissable selon l'une quelconque des revendications 1, 2 ou 6, dans laquelle lesdites particules sphériques de polymère sont constituées d'un polymère du type coeur/gaine.

9. Composition polymère thermoplastique ou thermodurcissable selon la revendication 8, dans laquelle ledit polymère du type coeur/gaine comprend une phase de coeur polymère et une ou plusieurs phases de gaine polymère, dont celle qui est située le plus à l'extérieur est compatible avec le polymère de matrice, laquelle ou lesquelles phases de gaine comptant pour 5 à 40 % du poids des particules.

10. Composition polymère thermoplastique ou thermodurcissable selon la revendication 6, 8 ou 9 dans la mesure où elle dépend de la revendication 2, dans laquelle ladite phase polymère unique ou la phase de coeur polymère du polymère du type coeur/gaine a un indice de réfraction ($n_D^{25}$) qui, dans un sens ou dans l'autre, s'écarte de l'indice de réfraction du polymère de matrice de moins de 0,003 unité.

11. Composition polymère thermoplastique ou thermodurcissable selon l'une quelconque des revendications 7 à 10, dans laquelle ladite phase polymère unique ou ledit polymère de coeur est un polymère caoutchouteux d'acrylate d'alkyle, le groupe alkyle ayant de 2 à 8 atomes de carbone, copolymérisé avec 0 ou jusqu'à 10 % d'un agent de réticulation et avec 0 ou jusqu'à 10 % d'un agent de greffage (par rapport au poids total de la phase polymère unique ou du polymère de coeur).

12. Procédé pour préparer une composition polymère thermoplastique ou thermodurcissable comprenant un polymère de matrice thermoplastique ou thermodurcissable et des particules polymères essentiellement sphériques, comportant uniquement une phase polymère unique, lesdites particules de la phase polymère unique ayant un diamètre moyen de 2 à 15 $\mu$m et une répartition granulométrique telle qu'au moins 90 % en poids des particules aient une granulométrie s'écartant au plus de 20 %, dans un sens ou dans l'autre, du diamètre moyen des particules, où le procédé consiste :

A) à polymériser une première émulsion aqueuse d'un ou plusieurs monomères qui, quand ils sont polymérisés, produisent une composition particulaire comprenant des particules polymères ;

B)

1. à gonfler les particules de la composition particulaire produite en A) ou bien, le cas échéant, les particules de B2), avec un ou plusieurs monomères, et

2. à polymériser le monomère de gonflement à l'intérieur des particules jusqu'à ce que tous les monomères soient polymérisés,

les étapes B1 et B2 étant si nécessaire répétées jusqu'à ce qu'au moins 90 % en poids des particules de la composition particulaire aient une granulométrie s'écartant de moins de 20 %, dans un sens ou dans l'autre, de la granulométrie souhaitée, auquel cas ces particules seront appelées des particules de polymère en phase unique, et à mélanger lesdites particules de polymère en phase unique, en une quantité de 0,1 à 40 % en poids par rapport à la composition totale, audit polymère de matrice.

13. Procédé selon la revendication 12, dans lequel la polymérisation de l'étape A) est mise en oeuvre dans des conditions qui forment le polymère en émulsion sous forme d'un oligomère pouvant facilement gonfler, de préférence dans des conditions englobant la présence d'un modérateur de transfert de chaîne, par exemple d'un mercaptan.

14. Procédé selon la revendication 12 ou 13, dans lequel une ou plusieurs polymérisations de l'étape B-2) sont mises en oeuvre dans des conditions qui forment un oligomère pouvant facilement gonfler, à partir du monomère de gonflement de préférence dans des conditions englobant la présence d'un modérateur de transfert de chaîne, par exemple d'un mercaptan.

15. Procédé selon l'une quelconque des revendications 12, 13 ou 14, dans lequel lesdites particules polymères en phase unique comprennent un polymère caoutchouteux d'acrylate d'alkyle, le groupe alkyle ayant de 2 à 8 atomes de carbone, copolymérisé avec 0 ou jusqu'à 10 % d'un agent de réticulation et avec 0 ou jusqu'à 10 % d'un agent de greffage (par rapport au poids total des particules).

16. Procédé selon l'une quelconque des revendications 12 à 15, dans lequel ledit polymère de matrice est essentiellement amorphe.

17. Procédé selon la revendication 16, dans lequel lesdites particules polymères en phase unique ont un indice de réfraction ($n_D^{25}$) qui s'écarte de l'indice de réfraction du polymère de matrice, dans un sens ou dans l'autre, de moins de 0,2 unité.

18. Utilisation de particules polymères essentiellement sphériques pour former une composition polymère thermoplastique ou thermodurcissable diffusant la lumière et/ou donnant une finition présentant un brillant réduit, comprenant un polymère de matrice thermoplastique ou thermodurcissable et lesdites particules polymères sphériques, où lesdites particules ont un diamètre moyen de 2 à 15 $\mu$m, une répartition granulométrique telle qu'au moins 90 % en poids des particules aient une granulométrie s'écartant au plus de 20 %, dans un sens ou dans l'autre, du diamètre moyen des particules ; du moment que, quand ladite composition polymère est une composition diffusant la lumière, à base d'une matrice polymère thermoplastique, et que les particules polymères sphériques comptent pour 0,1 à 10 % en poids de la composition totale, les particules polymères sphériques ne sont pas des polymères du type coeur/gaine ayant un coeur en un polymère caoutchouteux d'acrylate d'alkyle, le groupe alkyle ayant de 2 à 8 atomes de carbone, copolymérisé avec 0 à 50 % d'un monomère vinylique copolymérisable, avec 0 ou jusqu'à 5 % d'un agent de réticulation, et avec 0 ou avec jusqu'à 5 % d'un agent de greffage (par rapport au poids total du coeur), et un indice de réfraction ($n_D^{25}$) s'écartant, dans un sens ou dans l'autre, au plus de 0,2 unité, mais de préférence au moins de 0,003 unité, de l'indice de réfraction du polymère de matrice, et une ou plusieurs gaines polymères, dont celle qui est située le plus à l'extérieur est compatible avec le polymère de matrice, laquelle ou lesquelles gaines comptent pour 5 à 40 % du poids des particules.

19. Utilisation, sous forme de feuille ou d'article moulé, d'une composition polymère thermoplastique ou thermodurcissable selon l'une quelconque des revendications 1 à 11 ; ou telle que préparée dans les revendications 12 à 17, en tant que luminaire, écran pour rétroprojection, par exemple pour la télévision ou le cinématographe, une décoration, un panneau éclairé, un radôme, un appareil d'éclairage, un vitrage pour serre, une boîte à lumière, une table à dessin, une pièce automobile, par exemple un toit ouvrant ou un recouvrement pour les feux, une application artistique, un écran anti-éblouissement pour un équipement à écran à rayons cathodiques, ou un double vitrage, ou en tant que composant de ces derniers.